# EUROPEAN PATENT APPLICATION

(11) **EP 4 636 275 A1**
(43) Date of publication of application: **22.10.2025**
(21) Application number: 25164728.5
(22) Date of filing: 19.03.2025
(51) Int. Cl.: F16D 66/00, B60T 17/22

(54) **SYSTEMS AND METHODS FOR MONITORING WEAR OF A DISC BRAKE**

(30) Priority: 19.03.2024 US 202463567215 P; 17.03.2025 US 202519081487; 17.03.2025 US 202519081508
(71) Applicant: Webb Wheel Products Inc., Cullman, AL 35055 (US)
(72) Inventor: Svetlov, Paul, Harvest, 35749 (US)
(74) Representative: Håmsø Patentbyrå AS

(57) **Abstract**

A system for braking a vehicle includes a rotor, a disc brake having an inner brake pad and an outer brake pad that are selectively clamped onto the rotor to slow or stop rotation of the rotor, a carrier coupled to the vehicle, a caliper housing movable coupled to the carrier, and an adjuster for moving the inner brake pad and/or the outer brake pad relative to the rotor, a first sensor for sensing linear movement of the caliper housing relative to the carrier housing, a second sensor for sensing rotary movement of the adjuster, and a control system that determines outer brake pad wear based on the linear movement of the caliper housing relative to the carrier and inner brake pad wear based on the rotary movement of the adjuster.

## Description

### CROSS-REFERENCE TO RELATED APPLICATION

The present disclosure is based on and claims priority to U.S. Provisional Patent Application No. 63/567,215 filed March 19, 2024, the disclosure of which is incorporated herein by reference.

### FIELD

The present disclosure relates to disc brakes for wheels, and more particularly to disc brakes having calipers.

### BACKGROUND

The following patents and patent application publications provide background information related to the present disclosure.

EP Patent Publication No. 0566,006 discloses a lining wear detector for an air-operated disc brake which has a brake caliper which surrounds a brake disc and on one side of which is arranged an application device. The application device acts via at least one actuating spindle and a pressure piece seated on the end of the latter facing the brake disc on a brake pad mounted on the application-device side in the brake caliper in a manner which allows it to be displaced relative to the brake disc. An adjusting device is coupled rotationally to the actuating spindle keeping essentially constant the release clearance, which varies due to lining wear. The adjusting device is coupled to an angle-of-rotation sensor, the output signal of which corresponds to the instantaneous lining wear. To form a signal which represents a clear value for the lining wear, the adjusting device is coupled to a reduction gear which reduces the total number of revolutions performed by the adjusting device during the entire adjusting cycle to a maximum of one revolution and the output of which actuates an angle-of-rotation sensor.

Additional patent publications providing background information include: EP 2,458,240; EP 3,324,069; US 2019/0162256; US 2020/0309217; and US 2020/0340542.

U.S. Patent Applications No. 2023/0417301, which is hereby incorporated by reference in its entirety herein, discloses systems and methods for monitoring a wear state of a disc brake for braking a rotor of a vehicle. The disc brake has a caliper configured to clamp opposing inner and outer brake pads onto the rotor.

### SUMMARY

This Summary is provided to introduce a selection of concepts that are further described below in the Detailed Description. This Summary is not intended to identify key or essential features of the claimed subject matter, nor is it intended to be used as an aid in limiting the scope of the claimed subject matter.

**In** certain examples a method for determining wear of a disc brake that is for braking a rotor, the disc brake configured to clamp an inner brake pad and an outer brake pad onto the rotor and having a carrier, a caliper housing, and an adjuster configured to adjust position of the inner brake pad and/or the outer brake pad, includes sensing linear movement of the caliper housing relative to the carrier, sensing rotary movement of the adjuster, determining outer brake pad wear based on the linear movement of the caliper housing relative to the carrier, and determining inner brake pad wear based on the rotary movement of the adjuster.

In independent aspects, coupling a first sensor assembly to the disc brake such that a first magnet is coupled to the carrier, coupling a second sensor assembly to the disc brake such that a second magnet is coupled to the adjuster, the sensing linear movement of the caliper housing relative to the carrier includes sensing the first magnet, and the sensing rotary movement of the adjuster includes sensing the second magnet. In independent aspects, coupling the first sensor assembly to the disc brake includes coupling a first sensor for sensing the first magnet to the caliper housing, and wherein coupling the second sensor assembly to the disc brake includes coupling a second sensor for sensing the second magnet to the caliper housing. In independent aspects, transmitting an output that is indicative of the outer brake pad wear and/or the inner brake pad wear from a control system to an output device. In independent aspects, the determining the inner brake pad wear is based on both the rotary movement of the adjuster and the linear movement of the caliper housing relative to the carrier. In independent aspects, the determining the outer brake pad wear by determining the difference between an operational slide position and a baseline slide position and the operational slide position is determined when the disc brake clamps the outer brake pad onto the rotor. In independent aspects, sensing, with a sensor coupled to the caliper housing, a magnet coupled to the carrier and determining the operational slide position based on the sensing of the magnet. In independent aspects, determining a percent outer brake pad wear by dividing the outer brake pad wear by an initial outer brake pad thickness. In independent aspects, indicating an alert via an external device when the percent outer brake pad wear is greater than a maximum allowable percent outer brake pad wear. In independent aspects, the determining the inner brake pad wear includes determining the difference between a linear tappet distance of the adjuster and the outer brake pad wear to thereby determine the inner brake pad wear. In independent aspects, determining the linear tappet distance based on a total rotation of a tappet of the adjuster. In independent aspects, determining the total rotation by dividing a total rotary angle or a cumulative total rotary angle of the tappet by 360.0 degrees. In independent aspects, the total rotation is based on a stored total rotary angle of the tappet stored to a memory system of a control system. In independent aspects, the total rotation is based on a cumulative total rotary angle of the tappet determined by a control system and including sensing a sensed rotary angle as the tappet is rotated, determining a difference between the sensed rotary angle and a stored rotary angle, and adding the difference between the sensed rotary angle and the stored rotary angle to the stored rotary angle to determine the cumulative total rotary angle. In independent aspects, determining a percent inner brake pad wear by dividing the inner brake pad wear by an initial inner brake pad thickness. In independent aspects, indicating an alert via an external device when the percent inner brake pad wear is greater than a maximum allowable percent inner brake pad wear.

In certain examples, a method for determining wear of a disc brake that is for braking a rotor, the disc brake configured to clamp an inner brake pad and an outer brake pad onto the rotor and having an adjuster configured to adjust position of the inner brake pad and/or the outer brake pad, a carrier, and a caliper housing includes coupling a first sensor assembly to the disc brake such that a first magnet is coupled to the carrier and a first sensor for sensing the first magnet, coupling a second sensor assembly to the disc brake such that a second magnet is coupled to the carrier and a second sensor for sensing the second magnet, sensing the first magnet to determine linear movement of the caliper housing relative to the carrier, sensing the second magnet to determine rotary movement of the adjuster, determining outer brake pad wear based on the linear movement of the caliper housing relative to the carrier, and determining inner brake pad wear based on the rotary movement of the adjuster.

In independent aspects, the determining the outer brake pad wear by determining the difference between an operational slide position and a baseline slide position and the operational slide position is determined when the disc brake clamps the outer brake pad onto the rotor. In independent aspects, the determining the inner brake pad wear includes determining a difference between a linear tappet distance of the adjuster and the outer brake pad wear to thereby determine the inner brake pad wear. In independent aspects, transmitting an output that is indicative of the outer brake pad wear and/or the inner brake pad wear from a control system to an output device.

In certain examples, a system for braking a vehicle includes a rotor, a disc brake having an inner brake pad and an outer brake pad that are selectively clamped onto the rotor to slow or stop rotation of the rotor, a carrier coupled to the vehicle, a caliper housing movable coupled to the carrier, and an adjuster for moving the inner brake pad and/or the outer brake pad relative to the rotor, a first sensor for sensing linear movement of the caliper housing relative to the carrier housing, a second sensor for sensing rotary movement of the adjuster, and a control system that determines outer brake pad wear based on the linear movement of the caliper housing relative to the carrier and inner brake pad wear based on the rotary movement of the adjuster.

In independent aspects, the control system transmits an output to an output device, the output being indicative of the outer brake pad wear and/or the inner brake pad wear. In independent aspects, the control system determines the inner brake pad wear based on both the rotary movement of the adjuster and the linear movement of the caliper housing relative to the carrier. In independent aspects, the second sensor is a potentiometer. In independent aspects, the first sensor and the second sensor are coupled to the caliper housing. In independent aspects, a first magnet is coupled to the carrier and a second magnet coupled to the carrier housing, the first sensor is configured to sense the first magnet to determine the linear movement of the caliper housing relative to the carrier, and the second sensor is configured to sense the second magnet to determine the rotary movement of the adjuster. In independent aspects, a slide pin is coupled to the carrier, a first magnet is coupled to the slide pin, the slide pin is received into a sleeve defined by the caliper housing, and the first sensor is configured to sense the first magnet to determine the linear movement of the caliper housing relative to the carrier. In independent aspects, a magnet housing holds the first magnet relative to the slide pin. In independent aspects, the control system determines operational slide position based on the output from the first sensor and determines a difference between the operational slide position and a baseline slide position stored on a memory system of the control system to determine the outer brake pad wear. In independent aspects, the control system determines a percent outer brake pad wear by dividing the outer brake pad wear by an initial outer brake pad thickness that is stored on a memory system of the control system. In independent aspects, the control system transmits an output indicative of the percent outer brake pad wear is greater than a maximum allowable percent outer brake pad wear to an output device. In independent aspects, the adjuster includes a tappet and the second sensor is a potentiometer and the second sensor engages with the adjuster to sense rotation as the rotary movement of the adjuster occurs. In independent aspects, the adjuster includes a tappet and a second magnet is coupled to the tappet and the second sensor is configured to sense the second magnet to determine the rotary movement of the adjuster. In independent aspects, a magnet housing holds the second magnet relative to the tappet. In independent aspects, the control system determines linear tappet distance based on the output from the second sensor and determines a difference between the linear tappet distance and the outer brake pad wear to determine the inner brake pad wear. In independent aspects, the control system determines the linear tappet distance based on a total rotation of the tappet stored on a memory system of the control system. In independent aspects, the control system determines a percent inner brake pad wear by dividing the inner brake pad wear by an initial inner brake pad thickness that is stored on a memory system of the control system. In independent aspects, the control system transmits a signal indicative of the percent inner brake pad wear is greater than a maximum allowable percent inner brake pad wear to a communication device.

In certain examples, a system for determining wear of a disc brake for braking a rotor of a vehicle, the disc brake having a caliper configured to clamp opposing inner and outer brake pads onto the rotor, a carrier, a caliper housing, and an adjuster for moving the inner brake pad and/or the outer brake pad relative to the rotor, includes a first sensor configured to sense linear movement of the caliper housing relative to the carrier, a second sensor configured to sense sensing rotary movement of the adjuster, and a control system that determines outer brake pad wear based on the linear movement of the caliper housing relative to the carrier, determines inner brake pad wear based on the rotary movement of the adjuster, and transmits a signal indicative of the wear of the outer brake pad wear and the inner brake pad wear.

In independent aspects, the control system determines the inner brake pad wear based on both the rotary movement of the adjuster and the linear movement of the caliper housing relative to the carrier.

Various other features, objects, and advantages will be made apparent from the following description taken together with the drawings.

### BRIEF DESCRIPTION OF THE DRAWINGS

The present disclosure is described with reference to the following Figures. The same numbers are used throughout the Figures to reference like features and like components.
Fig. 1 is a perspective view of an example disc brake of the present disclosure for braking a rotor coupled to the wheel of a vehicle.
Fig. 2 is a partial exploded view of the disc brake and the rotor of Fig. 1.
Fig. 3 is a side view of another example disc brake according to the present disclosure.
Fig. 4 is a perspective view of the disc brake of Fig. 3.
Fig. 5 is a cut-away view of the disc brake of Fig. 3.
Fig. 6 is a cross-sectional view of the disc brake of Fig. 3 depicting an example first sensor assembly according to the present disclosure.
Fig. 7 is another cross-sectional view of the disc brake of Fig. 3 depicting the first sensor assembly and a second sensor assembly according to the present disclosure.
Figs. 8-15 are cross-sectional views of other example disc brakes and other example first sensor assemblies according to the present disclosure.
Figs. 16-17 are cross-sectional views of other example disc brakes and other example second sensor assemblies according to the present disclosure.
Fig. 18 is a schematic diagram of an example control system according to the present disclosure.
Figs. 19-25 and 26A-26C are schematic flow charts for example methods according to the present disclosure.

### DETAILED DESCRIPTION

During research and development in the field of disc brakes, the present inventor determined it would be advantageous to provide systems and methods for monitoring wear conditions of the disc brake, such as wear of the rotor, the inner brake pad, and the outer brake pad. The present inventor also determined that known systems and methods for monitoring wear conditions of disc brakes can be unreliable and often require disposable sensors that require replacement after a single use, for example wear sensors located in the brake pad of the disc brake. Accordingly, through research and experimentation, the present inventor developed the example disc brakes 10 and related systems of the present disclosure.

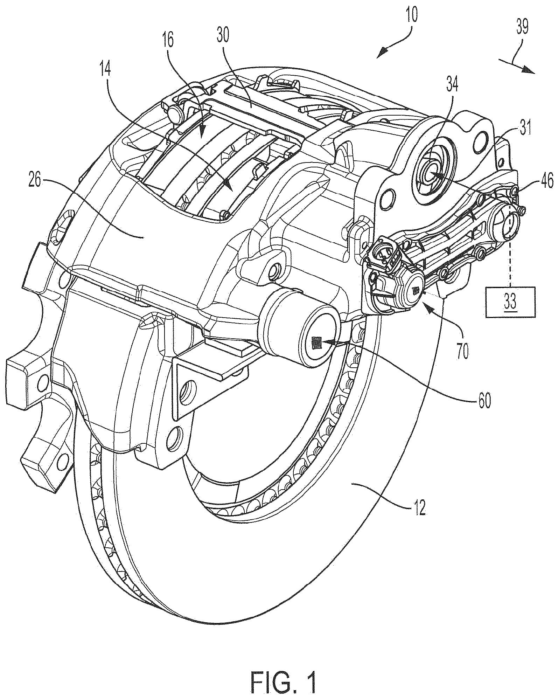

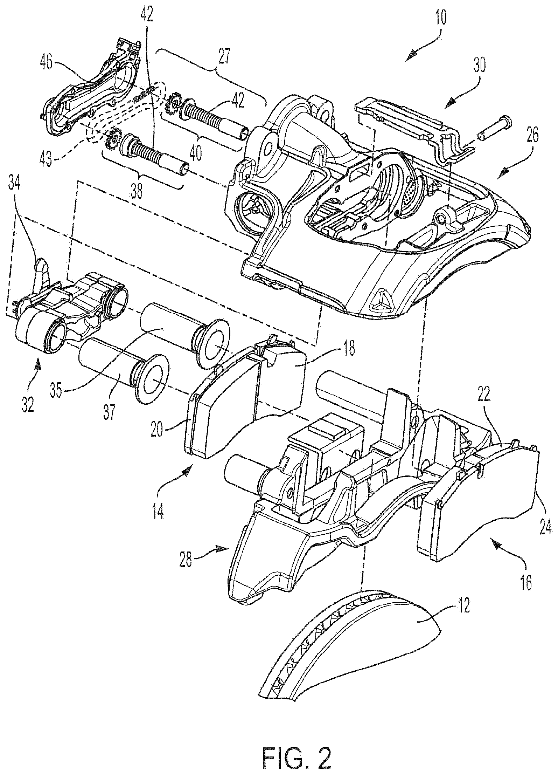

Figs. 1-2 depict an example disc brake 10 for braking a rotor 12 coupled to the wheel of a vehicle. The disc brake 10 is configured to clamp opposing inner and outer brake pads 14, 16 onto opposite sides of the rotor 12 to thereby apply a braking force that stops rotation of the rotor 12 and thus stop rotation of the corresponding wheel of the vehicle. The inner brake pad 14 includes an inner friction member 18 for frictionally engaging the inner side of the rotor 12 and an inner backing plate 20 that supports the inner friction member 18. The outer brake pad 16 includes an outer friction member 22 for frictionally engaging the outer side of the rotor 12 and an outer backing plate 24 that supports the outer friction member 22.

The disc brake 10 further includes a caliper housing 26, a carrier 28 that contains the inner and outer brake pads 14, 16, and an adjuster 27 that automatically adjusts the position of the inner and outer brake pads 14, 16 relative to the rotor 12, for example as the inner and outer friction members 18, 22 and/or the rotor 12 wear down. The carrier 28 is fixed to the vehicle, for example via a bracket secured to the vehicle's axle. The caliper housing 26 is slide-able relative to the carrier 28, as further described herein below. A removable retainer clip 30 retains and facilitates removal and replacement of worn inner and outer brake pads 14, 16. An actuator block 32 contains an input lever 34 for actuating the disc brake 10, as further described herein below. Note that the tappets 35, 37 are slidably received into bores 36 defined in the actuator block 32.

The disc brake 10 is operated by depressing the brake pedal in the cab of the vehicle such that a compressed air chamber 33 on the vehicle applies an input force on an input lever 34 in a first direction (see arrow 31). This moves the inner friction member 18 axially into frictional braking engagement with the rotor 12. Braking engagement of the inner friction member 18 on the rotor 12 generates a reaction force on the caliper housing 26, which causes the caliper housing 26 to axially slide along tappets 35, 37 relative to the carrier 28, in an opposite second direction (see arrow to arrow 39). This moves the outer friction member 22 of the outer brake pad 16 into frictional braking engagement with the outer side of the rotor 12.

Over time, the sides of the rotor 12 and the inner and outer friction members 18, 22 wear down from the frictional engagements, such that the thicknesses of these components decrease. As such, the gap between the inner and outer friction members 18, 22 and the opposite sides of the rotor 12 when the disc brake 10 is at rest increases. However, to prevent the gap from increasing, the adjuster 27 actively maintains the gap at a constant value over the wear life of the respective components. For example, the adjuster 27 can be configured to automatically adjust the axial positions of the inner and outer brake pads 14, 16 relative to the rotor 12 as the components wear down, thereby maintaining a constant gap between the sides of the rotor 12 and the inner and outer friction members 18, 22.

The adjuster 27 can include primary and secondary adjuster assemblies 38, 40, each having a stem 42 configured to rotate upon wear of the inner and outer brake pads 14, 16 and rotor 12, which causes axial (ratcheting) movement of the stems 42. The primary adjuster assembly 38 is coupled to the secondary adjuster assembly 40 via a chain 43 such that rotation of the stem 42 of the primary adjuster assembly 38 causes commensurate rotation of the stem 42 of the secondary adjuster assembly 40. A chain cover 46 encloses the adjuster 27 within the caliper housing 26 and can be part of the caliper housing 26 or a separate component. The adjuster 27 thus maintains a predetermined gap between the inner friction member 18 and the rotor 12 and between the outer friction member 22 and the rotor 12 during wear of these components. The adjustment carried out by the adjuster 27 is dependent upon the travel of the actuator block 32. A predetermined clearance is also defined to allow initial travel of the tappets 35, 37 without unnecessary adjustment. Wear on the inner and outer brake pads 14, 16 and/or the rotor 12 will allow the actuator block 32 to travel beyond the defined clearance resulting in an adjustment via an axial movement in the primary adjuster assembly 38 and therefore secondary adjuster assembly 40. The type and configuration of the adjuster 27 can vary and in certain examples, can be conventional. Some alternate examples of disc brakes and/or adjusters are taught in patents cited in the Background section of the present disclosure, and other examples are available for purchase from MEI Brakes.

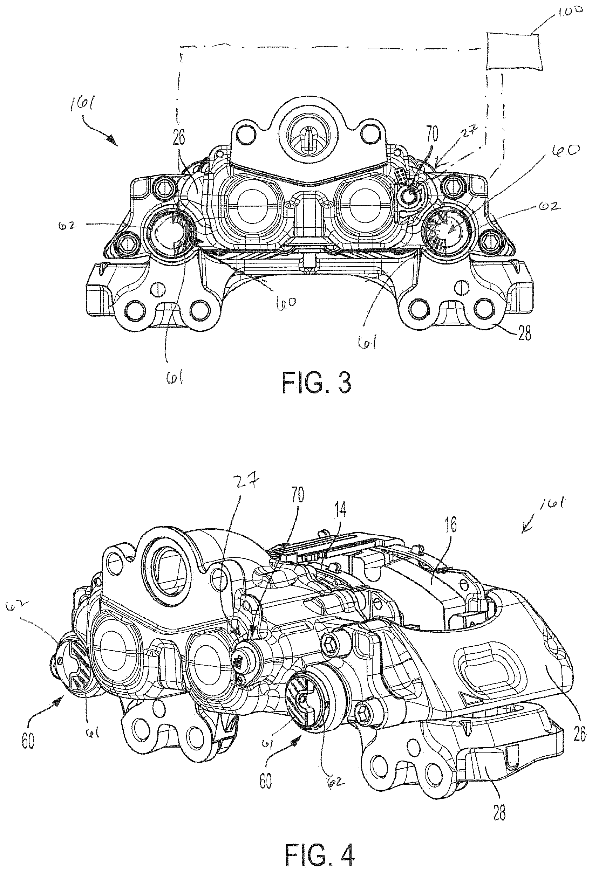

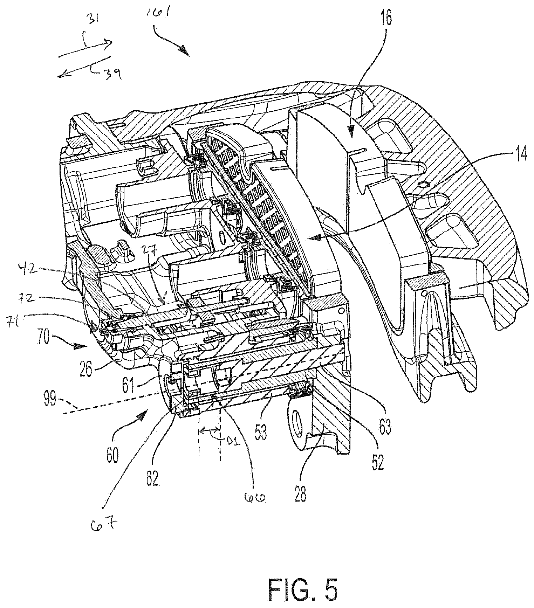

The braking engagement of the inner friction member 18 on the rotor 12 generates the reaction force on the caliper housing 26 (as noted above), and accordingly, the caliper housing 26 moves (e.g., slides) relative to the carrier 28 along axially extending slide pins, namely a first slide pin 51 (see Fig. 5) and a second slide pin 52 (see Fig 4). The caliper housing 26 defines sleeves 53 in which the slide pins 51, 52 are slidably received. The distance the caliper housing 26 is moved relative to the sleeve 53 is a linear slide distance.

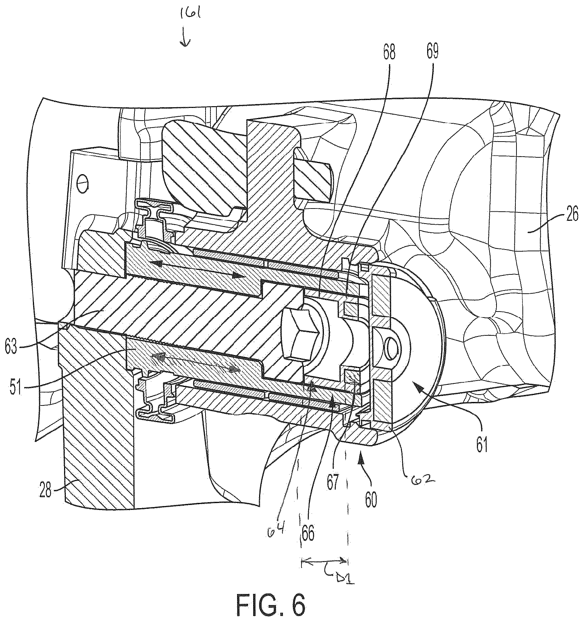

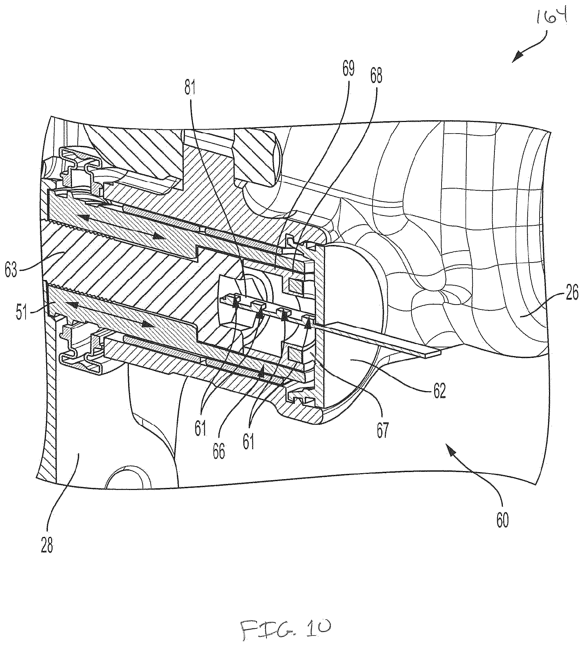

Other example disc brakes and associated components and/or features are described herein below. The example disc brakes and associated components and/or features described hereinbelow can include one or more components and/or features of the other example disc brakes 10 described with reference to Figs. 1-2. Similarly, the disc brake described with reference depicted in Fig. 1-2 can include one or more features and/or components of the other example disc brakes described hereinbelow. Note that several components and/or features of the example disc brakes of the present disclosure are denoted with the same part numbers, however, it should be understood that the use of the same part numbers for components and/or features of different examples described in the present disclosure should not be construed to indicate that the similarly marked systems and/or components are necessarily identical. The similarly marked systems and/or components may have varying features or characteristics. For example, a cap 62 of the caliper housing 26 is depicted in Fig. 6 is coupled to the first sensor 61 and the cap 62 depicted in Fig. 10 has a slot therein through which a printed circuit board 81 extends.

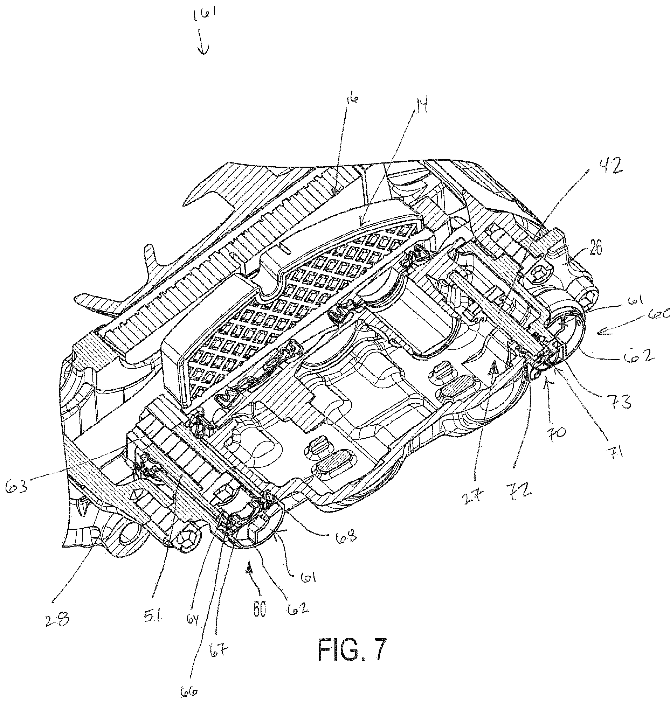

Referring now to Figs. 3-7, another example disc brake 161 according to the present disclosure is depicted. In operation, depressing the brake pedal on the vehicle causes the caliper housing 26 to axially slide in the second direction 39 along the slide pins 51, 52 (see also example axis 99 on Fig. 5 along which the caliper housing 26 slides). As such, the linear slide distance is the distance the caliper housing 26 slides in the second direction 39 from a rest position in which no brake pedal is not depressed and a braking position (depicted in Fig. 5) in which the brake pedal is activated. When the brake pedal is released, the caliper housing 26 slides in the first direction 31 along the slide pins 51, 52 and the linear slide distance is the distance the caliper housing 26 slides in the first direction 31 from the braking position to the resting position.

The present inventor recognized that the position of the caliper housing 26 and the linear slide distance after each braking operation changes over time as the wear occurs on the brake pads 14, 16 and/or the rotor 12. For example, the linear slide distance increases as the outer brake pad 16 wears. Accordingly, changes to the linear slide distance, and thereby changes to the relative movement between the caliper housing 26 and the carrier 28, can be correlated to the amount of wear to the brake pads 14, 16 and/or the rotor 12. The present inventor also recognized that the rotation of the stem 42 (as described above) occurs as the adjuster 27 accounts for wear on the brake pads 14, 16 and/or the rotor 12. Accordingly, rotational changes (e.g., angular rotation) the stem 42 will correspond to the amount of wear to the brake pads 14, 16 and/or the rotor 12.

The present inventor observed that conventional disc brakes do not monitor and/or determine continuous wear of the brake pads 14, 16 and/or the rotor 12. Instead, conventional disc brakes are often limited to either indicating that the brake pads are either worn (and should be replaced) or functional (and can remain in operation).

As such, the present inventor endeavored to develop assemblies that could be used during the life of the disc brake and not be directly tied to the replaceable brake pads and assemblies that can be adaptable or retrofitted to various types of disc brakes. The present inventor developed the example disc brakes of the present disclosure that include a first sensor assembly 60 configured to sense the linear slide distance of the caliper housing 26 relative to the carrier 28 and a second sensor assembly 70 configured to sense rotation of the stem 42 to thereby determine wear and/or thickness of the brake pads 14, 16 and/or the rotor 12. Note that Fig. 1 schematically depicts an example first sensor assembly 60 and an example second sensor assembly 70 of the example disc brake 10.

The example disc brake 161 depicted in Fig. 3-7 includes multiple example first sensor assemblies 60. Each first sensor assembly 60 includes a first sensor 61 coupled to the caliper housing 26 and a first magnet 67. The first sensor 61 is for sensing the position, the movement, magnetic field, the magnetic field strength, and/or the magnetic flux of the first magnet 67 (described herein) and generating and communicating corresponding output(s) (e.g., signals, data) via wired or wireless communication links 101, to a control system 100 (described in greater detail herein).

The number of first sensor assemblies 60 can vary, and in the example depicted in Figs. 3-7, two first sensor assemblies 60 are included with one first sensor assembly 60 utilized at each slide pin 51, 52. As such, the linear slide distance can be determined at either slide pin 51, 52. In certain examples, a linear slide distance can be determined by the first sensor assembly 60 coupled to the first slide pin 51 and another linear slide distance can be determined by the other first sensor assembly 60 coupled to the second slide pin 52 such that a control system 100 (described further herein) can compare both sensed linear slide distances.

The first sensor 61 is coupled to the cap 62 which covers one end of the sleeve 53 (Fig. 5) in which the slide pins 51, 52 (Figs. 5-6) are received. The slide pins 51, 52 are secured to the carrier 28 with a fastener 63 (e.g., bolt with head and threaded shaft). A cavity 64 is defined between the cap 62 and the fastener 63 in which a housing assembly 66 is positioned. The first sensor 61 is any suitable sensor, such as a Hall-Effect sensor, magnetoresistive, or magnetoinductive or the like, capable sensing the position, the movement, magnetic field, the magnetic field strength, and/or the magnetic flux of the first magnet 67.

The housing assembly 66 includes the first magnet 67 and a housing 68 that holds the first magnet 67. The housing 68 is shaped to couple to the interior surface of the second slide pin 52 by friction forces and/or adhesives. As such, the housing 68 and the first magnet 67 are fixed relative to the second slide pin 52. The caliper housing 26, the cap 62, and the first sensor 61 are movable together relative to the second slide pin 52 and the first magnet 67. The housing 68 includes a sidewall 69 that axially extends in the cavity 64. The first magnet 67 is spaced apart from the fastener 63 a first distance D1. The first magnet 67 is advantageously spaced apart from the first magnet 67 to avoid magnetic interference between the first magnet 67 and the fastener 63.

Figs. 4-5 and 7 depict an example second sensor assembly 70 according to the present disclosure configured to sense rotational changes (e.g., angular rotation) of the stem 42 which correspond to linear adjustment made by the adjuster 27 and therefore the amount of wear to the brake pads 14, 16 and/or the rotor 12. The second sensor assembly 70 is coupled to the caliper housing 26 on or adjacent to the adjuster 27 or to the adjuster 27 such as the chain cover 46. The second sensor assembly 70 includes a second sensor 71 that is capable of sensing rotation of the stem 42 by sensing the position, the movement, the magnetic field, the magnetic field strength, and/or the magnetic flux of a second magnet 72 (described herein) that is coupled to the stem 42 of the adjuster 27. In one non-limiting example, during brake operation the stem 42 rotates in the clockwise direction as the brake pads 14, 16 and/or the rotor 12 wear and the adjuster 27 takes up the 'clearance' to thereby maintain proper braking functionality. The second sensor 71 is any suitable sensor such as a Hall-Effect sensor, magnetoresistive, or magnetoinductive or the like, capable sensing the position, the movement, the magnetic field, the magnetic field strength, and/or the magnetic flux of the second magnet 72.

The second sensor 71 generates and communicates corresponding signals or data based on the sensed rotation, via wired or wireless communication links 101, to the control system 100 (described in greater detail herein). Reference is made to U.S. Patent Application Publication No. 2023/0417301, which is incorporated herein by reference above, which discloses conventional sensor assemblies configured to sense rotational changes of conventional adjusters and such components and/or features may be included with example second sensor assemblies 70 of the present disclosure.

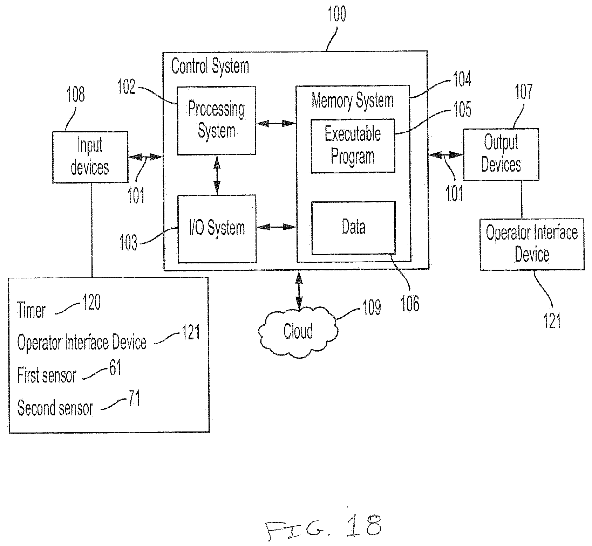

Generally, the control system 100 (Fig. 18) receives outputs (e.g., signals, data) from the second sensor(s) 71 and determines the sensed rotation (e.g., angle of rotation, distance of rotation) of the stem 42. The control system 100 then compares the sensed rotation to rotation data (e.g., predetermined initial rotation position, a cumulative rotation, a percentage of maximum allowable rotation) stored on a memory system 104 (Fig. 18) to determine wear of the inner brake pad 14 and/or computes the wear of the inner brake pad 14 using algorithms or look-up tables. The wear of the inner brake pad 14 is indicated by control system 100 as a distance/thickness, a percentage of the maximum thickness of the inner brake pad 14, and/or a percentage of the remaining life of the inner brake pad 14. The control system 100 can indicate the wear to the operator of the vehicle via the operator interface device 121 or transmitted to the fleet manager via cellular networks.

Similarly, the control system 100 receives outputs (e.g., signals, data) from the first sensor(s) 61 and determines the linear slide distance of the caliper housing 26 relative to the carrier 28. The control system 100 then compares the sensed linear slide distance to data (e.g., predetermined linear slide distance, a cumulative slide movement, a percentage of maximum allowable slide distance) stored on the memory system 104 to determine wear of the outer brake pad 16 and/or computes the wear of the outer brake pad 16 using algorithms or look-up tables. The wear of the outer brake pad 16 is indicated by control system 100 as a distance/thickness, a percentage of the maximum thickness of the outer brake pad 16, and/or a percentage of the remaining life of the outer brake pad 16. The control system 100 can indicate the wear to the operator of the vehicle via the operator interface device 121 or transmitted to the fleet manager via cellular networks.

In certain non-limiting examples, the data stored on the memory system 104 related to the linear slide distance is determined based on controlled, repeatable tests in which the disc brake is activated. Accordingly, the data is related to the actual operation of the actual disc brake to which the first sensor assembly 60 is coupled. In other examples, the data stored on the memory system 104 related to the linear slide distance inputted into or automatically logged to the control system 100 and stored on the memory system 104. In other examples, the control system 100 is configured to "learn" the threshold linear slide distance based on repeated braking of the disc brake.

In certain examples, the first sensor 61 and/or the second sensor 71 is a Hall-Effect sensor. In other examples, the first sensor 61 and/or the second sensor 71 are capable of sensing the magnetic field of the magnet 67, 72 in the x, y, and z directions such that the first sensor 61 and/or the second sensor 71 is capable of sensing the three-dimensional movement of the magnet 67, 72. An example of sensor capable of sensing the three-dimensional movements of a magnet is commercially available from Infineon (model #TLV493D-A1B6).

In certain examples, the control system 100 is configured to record and store or log the outputs received from the first sensor 61 and/or the second sensor 71. For instance, each determined linear slide distance may be logged onto the memory system 104. The operator or the fleet manager can access this data log to observe the list of linear slide distance and operation and wear of the disc brake. In certain examples, the control system 100 is configured to determine linear acceleration of the caliper housing 26 relative to the carrier 28 based on data from the first sensor 61 and the timer 210.

In certain examples, the control system 100 can determine the sensed linear slide distance, the sensed linear tappet distance, inner brake pad wear percentage and/or outer brake pad wear percentage using algorithms stored on the memory system 104. In certain examples, a linear slide pin change is equal to a slide pin initial position minus a slide pin final position. In certain examples, a tappet linear lead is 2.25 millimeters per one rotation of the stem. In certain examples, a rotational adjustment screw change equals the amount of whole and partial rotations of the stem. In certain examples, a linear tappet distance change is equal to rotational of the screw multiplied by the tappet linear lead.

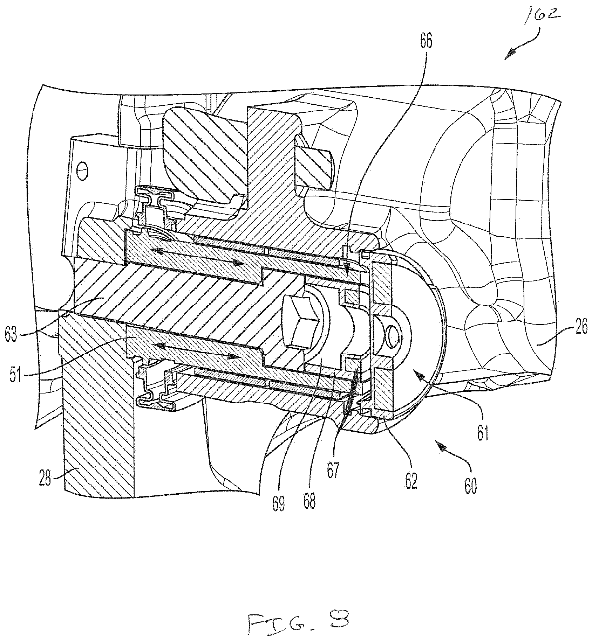

Fig. 8 depicts another example disc brake 162 having another example first sensor assembly 60 according to the present disclosure. The first sensor 61 includes a smart actuator module (SAM) that is configured to track the magnetic field strength of the first magnet 67. In one non-limiting example, the SAM a Hall Effect magnetic sensor commercially available from Silicon Labs (example part number Si7210 I2C). As the caliper housing 26 moves relative to the carrier 28 during operation of the disc brake 162 (see for example operation of the disc brake 10, 161 described above), the magnetic field sensed by the first sensor 61 changes and the SAM measures the magnetic field strength. The control system 100 then converts the magnetic field strength to the sensed linear slide distance using look-up tables to correlate magnetic field strength to linear slide distance.

In certain examples, the housing assembly 66 is secured in place at least partially due to magnetic attraction between the slide pin 51 and the first magnet 67. In certain examples, the first sensor assembly 60 includes a plurality of first sensors 61 each configured to sense the magnetic field strength or flux of the first magnet 67. The plurality of first sensors 61 are arranged on a sensor ring (not depicted) of the first sensor assembly 60. The plurality of first sensors 61 advantageously reduces sensing errors with different orientations of the first magnet 67, provides an improved temperature compensation because each magnetic sensor reads its own temperature and adjusts the magnetic field reading, and compensates for slight vibrations caused during disc brake operation. In certain examples, the first magnet 67 is axially oriented relative to the slide pin 52 and/or the sleeves 53 to avoid skewing the magnetic field generated by the first magnet 67 which would otherwise cause errors in sensing the magnetic field.

Note that the first magnet 67 need not be permanently attached to the slide pin 51. In some examples, the first magnet 67 is pressed into the housing 68 and simply inserted into the slide pin 51. The magnetic attraction of the first magnet 67 to the slide pin 51 keeps the first magnet 67 fixed the open end of the slide pin 51.

In certain examples, the housing 68 is required for the first magnet 67 to stay magnetically fixed near the exposed end of the slide pin 51. In certain examples, the first sensor 61 also includes a control system (independent and/or associated with the control system 100 with firmware as to how the first magnet 67 is calibrated with the first sensors 61. The firmware accounts for temperature, magnet quality, vibration, acceleration, and/or different properties of the slide pin 51.

In certain examples, the plurality of first sensors 61 improves the linear measurement accuracy. In certain examples, the SAM includes an accelerometer such that the first sensor(s) 61 sense acceleration of the caliper housing 26 relative to the carrier 28. The acceleration measurement will allow the control system 100 to detect the actual braking event of the wheel. On certain examples, the disc brake includes a pair of first sensor assemblies 60 to avoid errors associated with vibrations which cause movement in at least one of the first sensors 61.

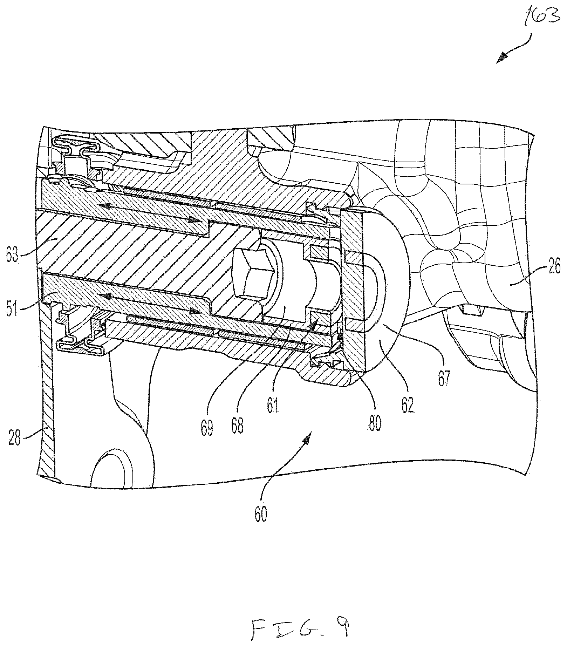

Fig. 9 depicts another example disc brake 163 having another example first sensor assembly 60 according to the present disclosure. In this example, the first magnet 67 is coupled to the cap 62 and moves with the caliper housing 26. The SAM is fixed to the slide pin 51. Reversing the placement of the first magnet 67 and the first sensor 61, as compared to the example first sensor assembly 60 depicted in Fig. 8, allows the first magnet 67 to not be affected by internal caliper slide heat and allows it to be cooled by external air flow. The example can improve the linear measurement accuracy as the disc brake 163 heats up because the magnetic field of the first magnet 67 may be affected as temperatures increase and further compensates for magnetic temperature drift.

Fig. 10 depicts another example disc brake 164 having another example first sensor assembly 60 according to the present disclosure. In this example, the first sensor assembly 60 includes a plurality of first sensors 61 each configured to sense the magnetic field strength or flux of the first magnet 67. The plurality of first sensors 61 are arranged on axially extending printed circuit board (PCB) 81 that extends from the cap 62 and each first sensor 61 is spaced apart from each other along the PCB.

The plurality of first sensors 61 in this example advantageously sense module multiple angles of the magnetic field and each first sensor 61 is uniquely identified by the control system 100. The control system 100 is configured to determine the sensed linear slide distance based on the signals received from the first sensors 61 and factoring in the position of each of the first sensors 61 such that the angle of the magnetic field sensed by each first sensor 61 is known by the control system 100. This example first sensor assembly 60 can advantageously improve sensed linear slide distance accuracy especially over large sensed linear slide distances. The first sensors 61 can be configured to continuously sense the magnetic field angle and the magnitude so there is always a sensed linear slide distance and/or magnetic position.

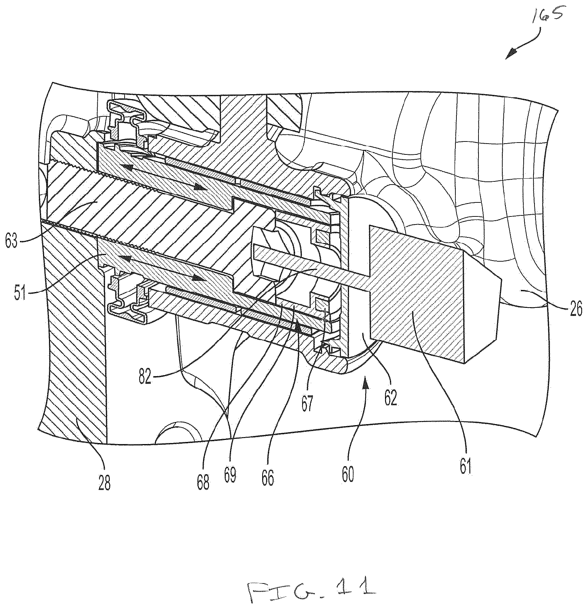

Fig. 11 depicts another example disc brake 165 having another example first sensor assembly 60 according to the present disclosure. The first sensor assembly 60 utilizes the principle of magnetostriction to sense the linear position of the first magnet 67 (e.g., annular magnet). The first sensor 61 sends a high frequency signal on a magnetic wire and when the signal meets the magnetic field from the first magnet 67, an induced reflected field is generated and sensed by the first sensor 61. In one non-limiting example, the first sensor 61 in this example is magnetostrictive linear position sensor commercially available from MTS Sensors (example part name GTE analog). The first sensor 61 and/or the control system 100 is further configured to determine a delta in time when the signal was sent and the induced reflected field is sensed by the first sensor 61. This delta time is used to calculate the linear distance of the magnetic field away from the first sensor 61. The advantage of this example sensor assembly 60 is it is not affected by temperature, magnet strength and quality, rotational position, and magnet orientation. In certain examples, the first sensor 61 is coupled to the cap 62 and includes a rod 82 that axially extends through the first magnet 67. As such, the rod 82 translates through the first magnet 67 as the caliper housing 26 moves. In certain examples, the rod 82 includes a copper wire that transmits an electric field that is reflected off the first magnet 67 such that the sensed linear slide distance can be determined.

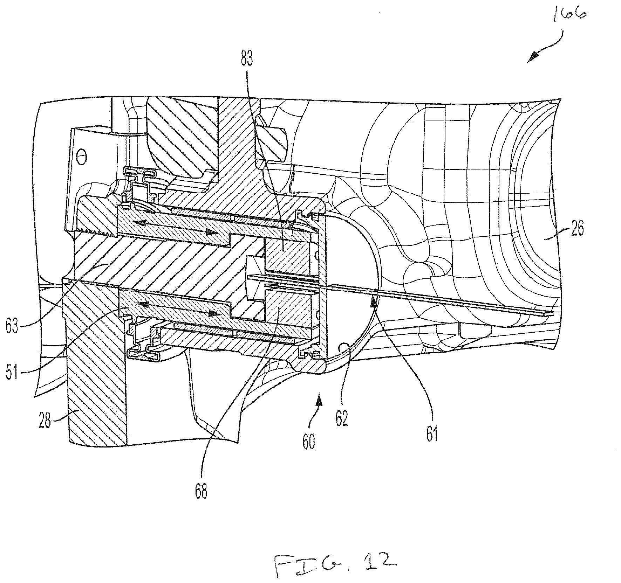

Fig. 12 depicts another example disc brake 166 having another example first sensor assembly 60 according to the present disclosure. In this example, the first sensor assembly 60 does not include a magnet and instead includes a copper plate 83 that is coupled to the housing assembly 66 and the first sensor 61 can be an inductance field detector. The first sensor assembly 60 is configured to sense linear slide distance by inducing an electromagnetic field into the copper plate 83. A PCB 81 axially extends from the cap 62. As the caliper housing 26 is moved (as described above with respect to operation of the example disc brakes 10, 161), the first sensor 61 moves relative to the copper plate 83 which is fixed relative to the slide pin 51 via the housing assembly 66. Note that the rotational orientation of the copper plate 83 should match the orientation of the first sensor 61 to ensure proper sensing of the induced electromagnetic field.

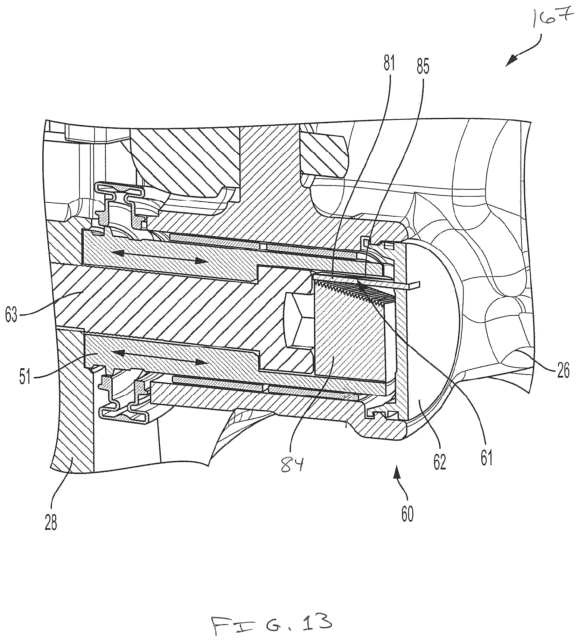

Fig. 13 depicts another example disc brake 167 having another example first sensor assembly 60 according to the present disclosure. In this example, the first sensor assembly 60 does not include a magnet and instead includes a sensing target 84 that is coupled to or integrated with the housing assembly. The first sensor assembly 60 in this example advantageously generates a high resolution of sensing due to the sensing target 84 and does not require magnet. A PCB 81 axially extends from the cap 62, and the shape of the sensing target 84 is designed such that an inductive sensor coil 85 on the PCB 81 senses the sensing target 84. The characteristics of the sensing target 84 are stored on the control system 100, and accordingly, the control system 100 can compare the sensed data from the inductive sensor coil 85, such as a linear inductive position sensor, to the stored data to thereby determine the sensed linear slide distance. In certain examples, the sensing target 84 has resolution inductive features that increase the increase the sensing resolution. For example, providing material projections or peaks on the surface of the sensing target 84 advantageously varies the sensed magnetic field or flux generated by the sensing target 84 such that greater variations in the sensed magnetic field or flux are sensed as the sensor coil 85 moves relative to the sensing target 84.

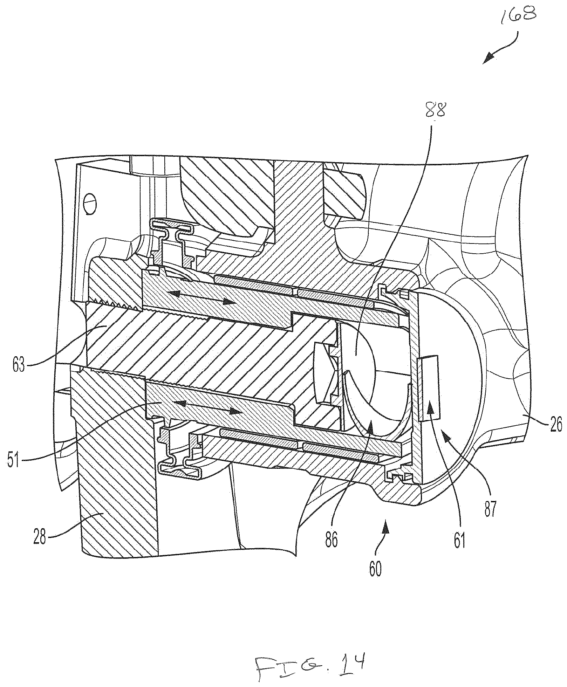

Fig. 14 depicts another example disc brake 168 having another example first sensor assembly 60 according to the present disclosure. In this example, the first sensor assembly 60 does not include a magnet and instead includes a flexible resistance member 86. The flexible resistance member 86 and an inner cap 88 can be advantageously designed and manufactured as a unitary piece that is positioned in the slide pin 51. The cap 62 includes a first sensor 61, such as a resistance sensor, strain gauge, or the like, on a PCB 87 that sensing strain forces in the resistance member 86 as the caliper housing 26 moves relative to the slide pin 51. The resistance sensing PCB 87 sends data to the control system 100 and the control system determines the sensed linear slide distance. As such, the control system 100 can determine the wear in brake pad 14, 16.

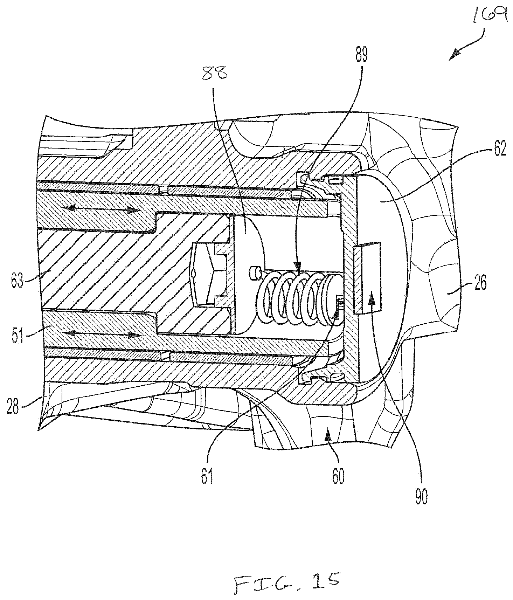

Fig. 15 depicts another example disc brake 169 having another example first sensor assembly 60 according to the present disclosure. In this example, the first sensor assembly 60 does not include a magnet and instead includes a spring 89. The spring 89 is coupled to the inner cap 88. The first sensor 61, which in this example is a strain gauge, is connected to the cap 62. A PCB 90 sends data to the control system 100 and the control system determines the sensed linear slide distance. As such, the control system 100 can determine the wear of the brake pads 14, 16.

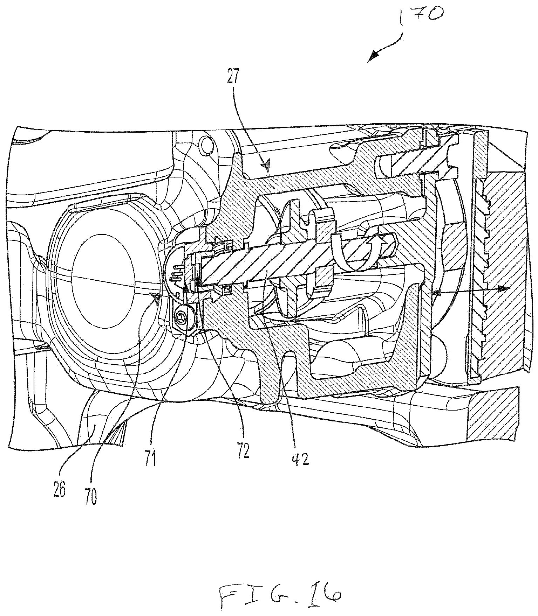

Fig. 16 depicts another example disc brake 170 having another example second sensor assembly 70 according to the present disclosure. The second sensor assembly 70 includes a second magnet 72 attached to the stem 42, and a cap 73 with the second sensor 71 coupled thereto. The second sensor 71 is capable of sensing the magnetic field strength or flux of the second magnet 72 as the second magnet 72 rotates and/or moves axially with the stem 42. The second sensor 71 sends signals to the control system 100, and the control system 100 determines the rotary position of the second magnet 72 and/or a sensed linear tappet distance and further determines the wear of the inner brake pad and/or the rotor 12 and/or the outer brake pad 16.

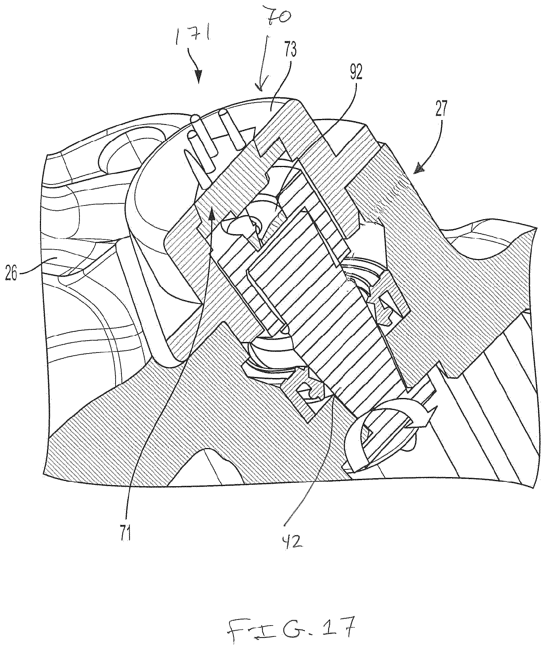

Fig. 17 depicts another example disc brake 171 having another example second sensor assembly 70 according to the present disclosure. In this example, the second sensor assembly 70 does not include a magnet and instead includes a sensing element 92 that is coupled to the stem 42 such that the sensing element 92 rotates with the stem 42. The second sensor 71 includes a rotary inductive coil to detect inductive shifts when the sensing element 92 rotates. The sensing element 92 can include one or more sloped surfaces, projections, depressions, and/or the like. The second sensor 71 sends corresponding signals to the control system 100. The control system determines the sensed linear tappet distance and further determines wear of the rotor 12 and/or the brake pads 14, 16 based on the sensed linear tappet distance. The example second sensor assembly 70 depicted in Fig. 16 advantageously is not affected by temperature changes of the disc brake 171.

Certain aspects of the present disclosure are described or depicted as functional and/or logical block components or processing steps, which may be performed by any number of hardware, software, and/or firmware components configured to perform the specified functions. For example, certain embodiments employ integrated circuit components, such as memory elements, digital signal processing elements, logic elements, look-up tables, or the like, configured to carry out a variety of functions under the control of one or more processors or other control devices. The connections between functional and logical block components are merely exemplary, which may be direct or indirect, and may follow alternate pathways.

In certain examples, the control system 100 (Fig. 18) communicates with each of the one or more components of one or more the example disc brakes 10, 161-171 described herein, the example sensor assemblies 60, 70, and/or a vehicle via a communication link 101, which can be any wired or wireless link. The control system 100 is capable of receiving information and/or controlling one or more operational characteristics of the example disc brake, the vehicle, and/or its various sub-systems by sending and receiving control signals via the communication links 101. In one example, the communication link 101 is a controller area network (CAN) bus; however, other types of links could be used. It will be recognized that the extent of connections and the communication links 101 may in fact be one or more shared connections, or links, among some or all of the components in the example disc brakes and/or the vehicle. Moreover, the communication link 101 lines are meant only to demonstrate that the various control elements are capable of communicating with one another, and do not represent actual wiring connections between the various elements, nor do they represent the only paths of communication between the elements. Additionally, the example disc brakes 10, 161-171, the sensor assemblies 60, 70, and/or the vehicle may incorporate various types of communication devices and systems, and thus the illustrated communication links 101 may in fact represent various different types of wireless and/or wired data communication systems.

The control system 100 may be a computing system that includes a processing system 102, memory system 104, and input/output (I/O) system 103 for communicating with other devices, such as input devices 108 (e.g., the first sensor 61, the second sensor 71, an operator interface device 121) and output devices 107 (e.g., the operator interface device 121 can additionally be utilized as an output device 107, touchscreen panel, LED lights, audio speakers), either of which may also or alternatively be stored in a cloud 109. The processing system 102 loads and executes an executable program 105 from the memory system 104, accesses data 106 stored within the memory system 104, and directs the example disc brake and/or the vehicle to operate as described in further detail below.

The processing system 102 may be implemented as a single microprocessor or other circuitry, or be distributed across multiple processing devices or sub-systems that cooperate to execute the executable program 105 from the memory system 104. Non-limiting examples of the processing system include general purpose central processing units, application specific processors, and logic devices.

The memory system 104 may comprise any storage media readable by the processing system 102 and capable of storing the executable program 105 and/or data 106. The memory system 104 may be implemented as a single storage device, or be distributed across multiple storage devices or sub-systems that cooperate to store computer readable instructions, data structures, program modules, or other data. The memory system 104 may include volatile and/or non-volatile systems, and may include removable and/or non-removable media implemented in any method or technology for storage of information. The storage media may include non-transitory and/or transitory storage media, including random access memory, read only memory, magnetic discs, optical discs, flash memory, virtual memory, and non-virtual memory, magnetic storage devices, or any other medium which can be used to store information and be accessed by an instruction execution system, for example.

The control system 100 can include a timer or counter 210 such that acceleration, velocity and/or distance traveled can be determined based on the data received from the first sensor 61 and/or the second sensor 71. The control system 100 is also configured to receive data or inputs from other components in the vehicle, the towed vehicle, and/or associated braking system such as the operator interface device 121 and/or the indicator 120. The components associated with the control system 100 (e.g., the first sensor 61) are powered by a battery and/or a power source (not shown) on the vehicle or the towed vehicle.

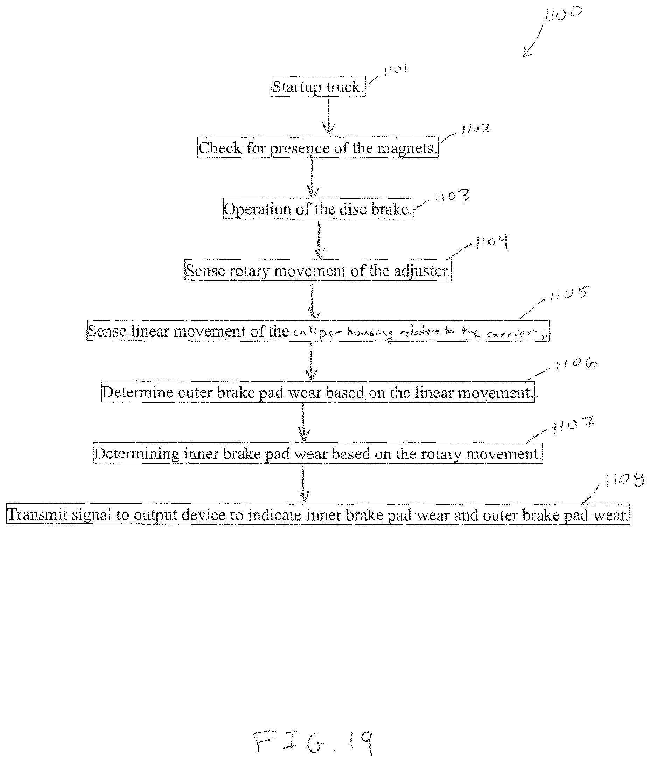

Figs. 19-25 and 26A-26C depict various methods according to the present disclosure. The example methods are described below with reference to the example disc brakes 10, 161 described above with respect to Figs. 1-2 and Figs. 3-7, however, the example methods may be utilized with any of the example disc brakes described herein. Note that one or more steps from any of methods may be excluded or incorporated into any other methods and that the present disclosure is not limited to the specific combination of steps set forth below in the example methods described below.

Fig. 19 depicts an example method 1100 for determining wear of the inner brake pad 14 and the outer brake pad 16 for an example disc brake in accordance with some embodiments of the present disclosure, such as the disc brake 161 depicted in Figs. 3-7.

At step 1101, the truck is started or powered on by operator and thereby the first sensor assembly 60, the second sensor assembly 70, and/or the control system 100 are provided with electrical power from a power source (e.g., battery). This step can be initiated by operator turning the key of the truck, pushing a button on a remote control, or engaging a switch in the cab of the truck.

At step 1102, one or both sensor assemblies 60, 70 sense for the presence of the respective magnets 67, 72. For example, the second sensor 71 senses for presence of the second magnet 72 and generates corresponding output which are received by the control system 100 which determines if the second sensor assembly 70 is operating properly. If the control system 100 determines the second magnet 72 is absent, the control system 100 determines that the second sensor assembly 70 is not operating properly and should be inspected by the operator. The control system 100 may provide an alert or error message via the operator interface device 121 to the operator for example (e.g., light on the dashboard of the truck). However, if the second magnet 72 is sensed, the control system 100 determines the second sensor assembly 70 is operating properly and the system is ready for determining the wear of the inner brake pads 14. Steps similar to the steps described above can be utilized for the checking for presence of the first magnet 67 and the functionality of the first sensor assembly 60.

At step 1103, the disc brake 161 is operated as the operator applies the brakes to slow and/or stop the truck for example, as described above. In one example operation of the disc brakes 161, the operator presses a brake pedal and accordingly, compressed air is supplied to the disc brake 161 from an air system (not depicted) on the truck. The disc brake 161 applies brake forces to the rotor 12 thereby slowing or stopping the rotation of the corresponding wheel. During application of the braking forces, the adjuster 27 may automatically move the tappets 35, 37 toward the brake pads 14, 16 to remove any excess clearance distance between the inner brake pad 14 and/or the outer brake pad 16 and the rotor 12. The adjustment causes rotation of the stem 42 of the primary adjuster assembly 38 and commensurate rotation of the stem 42 of the secondary adjuster assembly via the chain 43. The rotation of the stems 42 may be in a first rotational direction. As such, the second magnet 72 on the adjuster also rotates.

At step 1104, the second sensor 71 senses rotation or rotary movement of the second magnet 72 as the stem 42 of the adjuster 27. The inner brake pad 14 acts on the rotor 12 creating a pushing force that causes a reaction force to move the caliper housing 26 relative to the carrier 28 and as such the slide pin 52 with the first magnet 67 thereon slides in a first direction relative to the sleeve 53. At step 1105, the first sensor 61 senses the linear movement of the first magnet 67 moving the sleeve 53 and the linear movement of the caliper housing 26 relative to the carrier 28. When the operator releases the brake pedal, compressed air is no longer supplied to the disc brake 161 and the brake pads 14, 16 move away from the rotor 12. The second magnet 72 and the stems 42 may rotate in a second rotational direction and the slide pin 52 and the first magnet 67 slide in an opposite second direction in the sleeve 53.

At step 1106, the control system 100 determines the wear of the outer brake pad 16 based on output (s) received from the first sensor 61 that are indicative of the linear movement of the first magnet 67 moving in the sleeve 53 and thereby the linear movement of the caliper housing 26 relative to the carrier 28. The control system 100 can determine the wear of the outer brake pad 16 by comparing the position of the slide pin 51 and/or the first magnet 67 during the braking operation of the disc brake 161 to a starting or baseline position of the of the slide pin 51 and/or the first magnet 67. The difference between the baseline position and the position during the braking operation is the linear slide distance. In other certain examples, another sensor could directly sense the outer brake pad thickness. Note that an example method 1200 for determining the wear of the outer brake pad 16 is described below.

At step 1107, the control system 100 determines the wear of the inner brake pad 14 based on output(s) received from the second sensor 71 that are indicative of rotation or rotary movement of the second magnet 72 as the stem 42 of the adjuster 27 is rotated. The control system 100 can determine the wear of the inner brake pad 14 by computing the total rotation of the stem 42 which can be converted to a linear tappet distance which is then reduced by the outer brake pad wear to determine the inner brake pad wear. The linear tappet distance is a distance that the tappet 35, 37 is moved toward or away from the brake pads 14, 16 by the adjuster 27 to maintain a predetermined or constant gap between the rotor 12 and the brake pads 14, 16. In other certain examples, another sensor could directly sense the inner brake pad thickness. Note that one specific example method 1300 for determining the wear of the inner brake pad 14 is described below. In certain examples, step 1107 occurs prior to step 1106.

At step 1108, the control system 100 transmits output(s) to an output device (such as the operator interface device 121) that are indicative of the inner brake pad wear and/or the inner brake pad wear. The outer brake pad wear and/or the inner brake pad wear can be expressed as an amount of wear (e.g., 5.4 mm of inner brake pad wear), a percentage remaining brake pad (e.g., 63.0% remaining inner brake pad), and/or a percentage of total worn brake pad (e.g., 47.0% of the inner brake pad is worn).

In other examples of the second sensor assembly 70, the second sensor assembly 70 can include one or more components for sensing rotation of the stem 42. For example, the second sensor 70 of the second sensor assembly 70 can be another device or sensor for sending rotation of the stem 42 such as a potentiometer manufactured by Bourns part number 3382G-1-103G), an optical rotary sensor, a resistive rotary position sensor, or others known in the art. Depending on the specific second sensor 70 utilized, the second sensor assembly 70 may exclude the second magnet and/or include the other clips, housings, sleeves, and/or other devices for facilitating sensing rotation of the stem 42.

In an example in which the second sensor 71 is a potentiometer, the potentiometer is coupled to the stem 42 of the adjuster 27 and the second magnet 72 can be excluded from the second sensor assembly 70. The potentiometer can be coupled to the stem 42 or to the caliper housing 26 and/or the chain cover 46 and the stem 42. The second sensor assembly 70 can includes a clip that couples the potentiometer to the stem 42. As the stem 42 of the adjuster 27 rotates, the voltage or resistance potentiometer increases or decreases. For example, as the stem 42 is rotated in the first rotational direction, the voltage or resistance increases and as the stem 42 is rotated in the second rotational direction, the voltage or resistance decreases. The potentiometer is coupled the control system 100 and outputs signals to the control system 100 indicative of the voltage or resistance. As such, the rotary movement of the adjuster 27 is sensed by the potentiometer and the control system 100 can determine linear tappet distance and/or the rotary angle of the stem 42 with a lookup table stored on the memory system 104 that correlates the sensed voltage or resistance from the potentiometer and to an angular position of the stem 42 and/or the linear tappet distance. The control system 100 can determine the outer brake pad wear, the inner brake pad wear, and/or any other components or values related to and/or used to determine outer brake pad wear and/or inner brake pad wear that are described herein the present disclosure with respect to the other embodiments and methods described herein (e.g., linear tappet distance, baseline slide position, baseline rotary angle, initial inner brake pad thickness, stored cumulative rotary angle).

For example, with the second sensor 71 being a potentiometer, the voltage or resistance communicated to the control system 100 can be determined to be a rotary angle of the stem (e.g., stored rotary angle, baseline rotary angle) which can be utilized with the features and/or methods described in the present disclosure. When the stem 42 of the adjuster 27 is rotated, the voltage or resistance of the potentiometer changes and the potentiometer sends an output(s) to the control system 100. The control system 100 can determine if the change to the voltage or resistance is indicative of a change in the angular position of the stem 42 and determine the sensed rotary angle based on a look-up table that correlates the voltage or resistance to a rotary angle or algorithms that converts the voltage or resistance to rotary angle. The control system 100 can then determine if the sensed rotary angle should be added to the stored rotary angle to determine the cumulative rotary angle. In other instances, the potentiometer would report the total rotation based on the voltage or resistance, and control system 100 can determine the total rotations of the stem, the linear tappet distance, and the brake pad 14, 16 wear based on the outputs from the potentiometer.

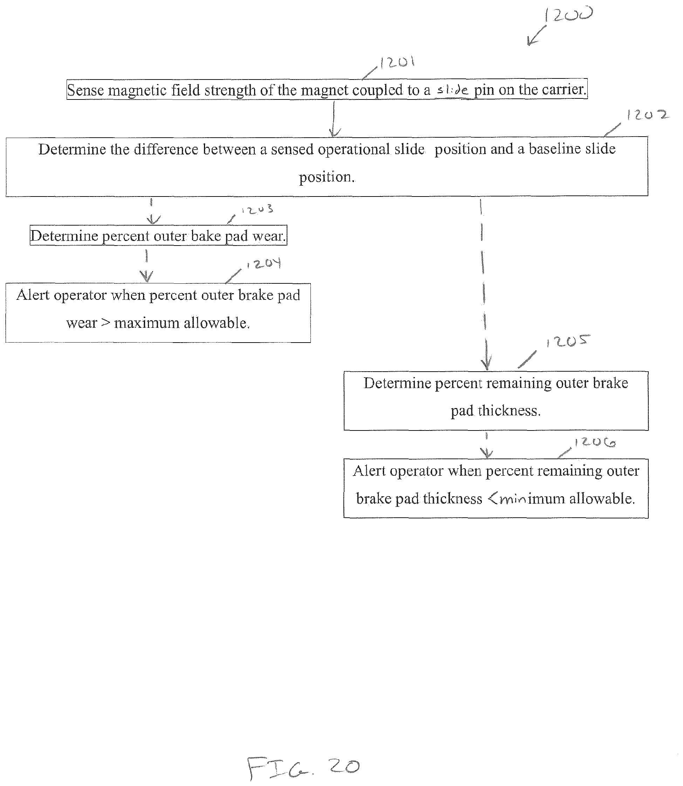

Referring to Fig. 20, an example method 1200 for determining the wear of the outer brake pad 16 is described herein below. The example method 1200 can be utilized in addition or alternatively with the example step 1106 noted above with respect to the example method 1100.

At step 1201, the first sensor 61 continuously and/or periodically senses the magnetic field strength of the first magnet 67 during the operation of the disc brake 161 such that the control system 100 can determine the operational slide position of the first magnet 67 and/or the slide pin 52 in the sleeve 53. The operational slide position can be the position of the slide pin 52 and/or the first magnet 67 in the sleeve 53 during the braking operation of the disc brake 161. The control system 100 receives the output(s) from the first sensor 61 corresponding to the magnetic field strength of the first magnet 67 and determines the operational slide position. Note that in certain examples, the first sensor 61 may continuously sense the movement of the first magnet 67 from its resting initial slide position or baseline slide position when no braking forces are applied to an end position or operational slide position that corresponds with the braking forces are fully applied and there is no further movement of the first magnet 67. In certain examples, the control system 100 may ignore signals between the resting initial position up until the operational slide position and/or only utilize the largest magnetic field strength sensed when determining the operational slide position. The control system 100 can determine the operational slide position with a lookup table that correlates the magnetic field strength to a corresponding operational slide position (e.g., a sensed magnetic field strength (milliTesla) correlates to a specific slide pin 52 position (millimeters) from the cap 62).

At step 1202, the control system 100 then calculates the outer brake pad wear which is a difference between the operational slide position and a baseline slide position. The baseline slide position can be an initial starting position of the slide pin 52 and/or the magnet 67 in the sleeve 53 when braking operation is not occurring. See also non-limiting example method 1500 for example steps for an example method for determining or inputting the baseline slide position). For example, the baseline slide position is 2.0 mm and the operational slide position is 10.0 mm and the difference is 8.0 mm which is the outer brake pad wear. The outer brake pad wear of the outer brake pad 16 is then stored to the memory system 104. Note that as the disc brake is operated, new values for the outer brake pad wear are determined and can be stored the memory system 104 (e.g., the new outer brake pad wear may replace an existing outer brake pad wear on the memory system 104 or a log all the outer brake pad wear may be stored).

At step 1203, the control system 100 can optionally determine a percent outer brake pad wear by dividing the outer brake pad wear by an initial outer brake pad thickness stored on the memory system 104. The initial outer brake pad thickness can be measured on the outer brake pad 16 or is the manufactured original thickness determined by the manufacturer of the outer brake pad 16. For example, the initial outer brake pad thickness is 22.0 mm and the outer brake pad wear is 8.0 mm. As such, the percent outer brake pad wear is 36.36%.

At step 1204, the outer brake pad thickness are optionally indicated to the operator of the truck via the operator interface device 121. In certain examples, the control system 100 generates an alert when the percent outer brake pad wear is greater than a maximum allowable percent outer brake pad wear (e.g., an alert is generated when the percent outer brake pad wear is greater than 80.0% maximum allowable percent outer brake pad wear). In certain examples, the value of the outer brake pad wear is indicated to the operator or the outer brake pad wear is indicated as a visual or audio alert (e.g., a beep when the percent outer brake pad wear is greater than 50.0%, a yellow color light when the percent outer brake pad wear is between 25-50% and a red color light when the percent outer brake pad wear is greater than 50%).

At step 1205, the control system 100 can optionally determine percent remaining outer brake pad thickness by calculating the difference between the initial outer brake pad thickness and the outer brake pad wear and dividing said difference by the initial outer brake pad thickness. For example, the initial outer brake pad thickness is 22.0 mm and the outer brake pad wear is 8.0 mm. As such, the difference is 14.0 mm divided by 22.0 mm such that the remaining outer brake pad thickness 63.64%.

At step 1206, the outer brake pad thickness are optionally indicated to the operator of the truck via the operator interface device 121. In certain examples, the control system 100 generates an alert when the percent remaining outer brake pad thickness is less than a minimum allowable thickness (e.g., an alert is generated when the percent remaining outer brake pad thickness is less than 20.0%).

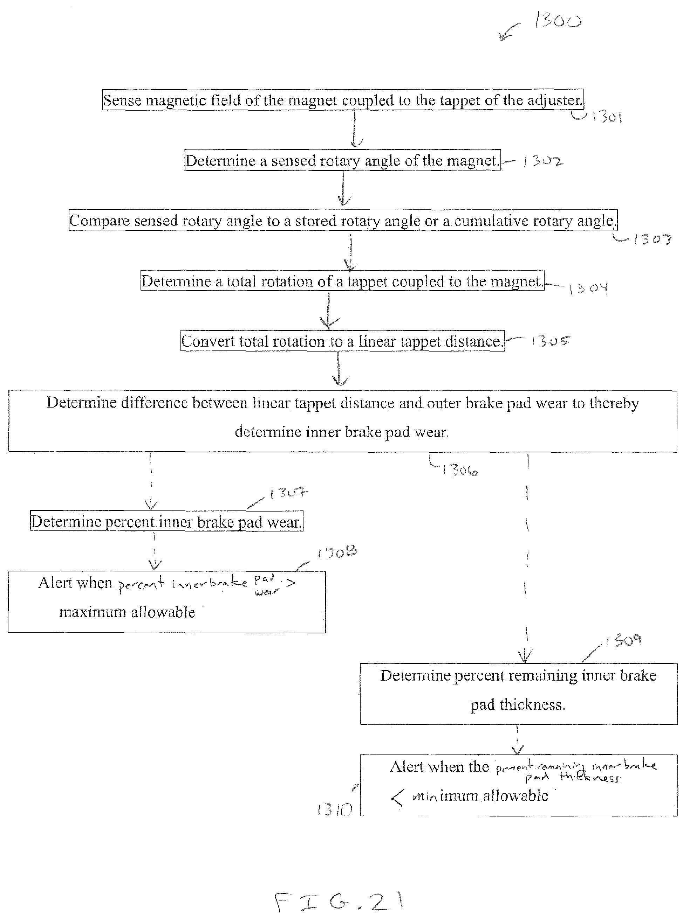

Referring to Fig. 21, an example method 1300 for determining the wear of the inner brake pad 14 is described herein below. The example method 1200 can be utilized in addition or alternatively with the example step 1107 noted above with respect to the example method 1100.

At step 1301, the second sensor 71 continuously and/or periodically senses the second magnet 72, and at step 1302, the determines a sensed rotary angle of the second magnet 72. In one example, the second magnet 72 has opposing magnetic poles and based on the magnet field, the second sensor 71 can determine the relative position of the poles and thereby the second magnet 72. The sensed rotary angle is exemplary a rotational degree (e.g., 12.0 degrees) relative to a datum or a rotary angle (e.g., the rotary angle can be set as 0.0 degree to correspond to the initial angular position of the magnet 72 when the disc brake is assembled and the adjuster 27 has not yet been adjusted). In other examples, the second sensor 71 has a magnetic divide where it senses the poles of a dimetric cylinder magnet and therefore can determine the sensed rotary angle.

At step 1303, the control system 100 compares the sensed rotary angle to a stored rotary angle that is stored to the memory system 104, and adds, if necessary, the difference between the sensed rotary angle to the stored rotary angle to determine a stored cumulative rotary angle. For example, if the stored rotary angle is 16.0 degrees and the sensed rotary angle is 24.0 degrees, the cumulative rotary angle is 24.0. In another example, if the stored rotary angle is 355.0 and the sensed rotary angle is 24.0 degrees, the stored cumulative rotary angle is 379.0 degrees.

Based on the stored rotary angle or the stored cumulative rotary angle, at step 1304, the control system 100 determines the total rotation of a tappet 37. For example, the stored rotary angle or the stored cumulative rotary angle is divided by one full rotation, 360.0 degrees, to determine a number of rotations (e.g., 450.0 degrees is 1.25 rotations). Note that an example method 1400 for comparing the sensed rotary angle to the stored rotary angle or the stored cumulative rotary angle and determining the total rotation is described below.

At step 1305, the control system 100 the determines the linear tappet distance based on the total rotation. In one example, the control system 100 determines linear tappet distance with a lookup table that correlates the total rotation to a linear tappet distance. For example, 1.65 rotations equate to 4.65 mm of linear tappet distance. In other examples, the control system 100 determines linear tappet distance with an algorithm or conversion ratio that converts the total rotation to a linear tappet distance. For example, total rotation of 360.0 degrees corresponds to 2.25 millimeters of linear tappet movement.

At step 1306, the control system 100 then calculates inner brake pad wear of the inner brake pad 14 which is the difference between the linear tappet distance and the outer brake pad wear. For example, the linear tappet distance is 6.0 mm and the outer brake pad wear is 8.0 mm such that the inner brake pad wear is 2.0 mm. The inner brake pad wear is stored to the memory system 104. Note that as the disc brake is operated, new values for the inner brake pad wear are determined and stored the memory system 104. In one example, the inner brake pad wear value stored to the memory system 104 is overwritten each time the inner brake pad wear is determined. In other examples, the each computed inner brake pad wear is logged to the memory system 104.

At step 1307, the control system 100 can optionally determine the percent inner brake pad wear by dividing the inner brake pad wear by an initial inner brake pad thickness. The initial inner brake pad thickness can be measured on the inner brake pad 14 or is the manufactured original thickness determined by the manufacturer of the inner brake pad 14. For example, the initial inner brake pad thickness is 22.0 mm and the inner brake pad wear is 2.0 mm. As such, the percent inner brake pad wear is 9.09%.

At step 1308, the inner brake pad thickness are optionally indicated to the operator of the truck via the operator interface device 121. In certain examples, the control system 100 generates an alert when the percent inner brake pad wear is greater than a maximum allowable percent inner brake pad wear (e.g., an alert is generated when the percent inner brake pad wear is greater than 80.0% maximum allowable percent inner brake pad wear). In certain examples, the value of the inner brake pad wear is indicated to the operator or the inner brake pad wear is indicated as a visual or audio alert (e.g., a beep when the percent inner brake pad wear is greater than 50.0%, a yellow color light when the percent inner brake pad wear is between 25.0-50.0% and a red color light when the percent inner brake pad wear is greater than 50.0%).

At step 1309, the control system 100 can optionally determine percent remaining inner brake pad thickness by calculating the difference between an initial inner brake pad thickness stored on the memory system 104 and the inner brake pad wear and dividing said difference by the initial inner brake pad thickness. For example, the initial inner brake pad thickness is 22.0 mm and the inner brake pad wear is 2.0 mm. As such, difference is 20.0 mm divided by 22.0 mm such that the remaining inner brake pad thickness 90.91%.

At step 1310, the remaining inner brake pad thickness is optionally indicated to the operator of the truck via the operator interface device 121. In certain examples, the control system 100 generates an alert when the percent remaining inner brake pad thickness is less than a minimum allowable thickness (e.g., an alert is generated when the percent remaining inner brake pad thickness is less than 20.0%).

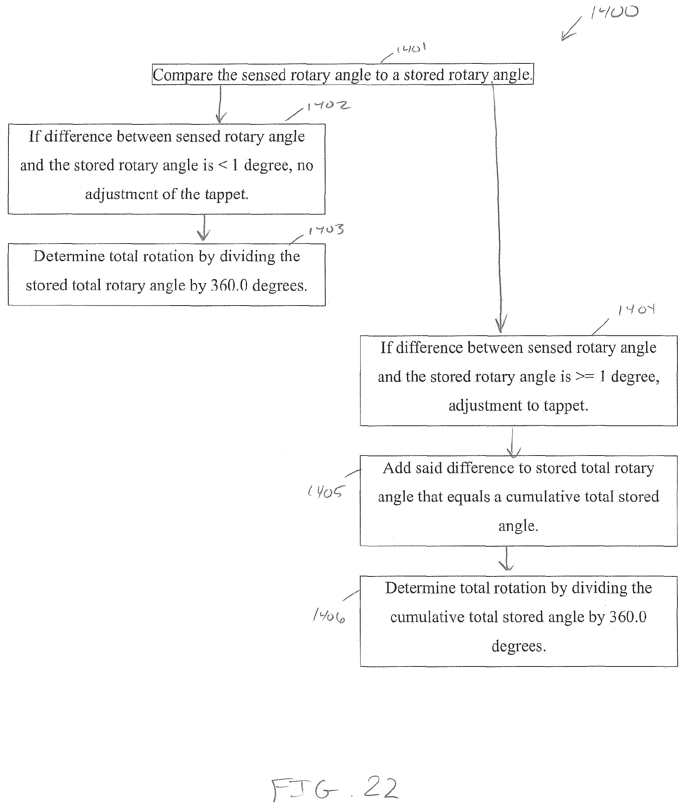

Referring to Fig. 22, an example method 1400 for comparing the sensed rotary angle to the stored rotary angle or the stored cumulative rotary angle and determining the total rotation is described below.

The control system 100 compares the sensed rotary angle to the stored rotary angle, at step 1401. If the difference between the sensed rotary angle and the stored rotary angle is less than 1.0 degree (e.g., the stored rotary angle is 16.0 degrees and the sensed rotary angle is 16.5 degrees) (step 1402), the control system 100 determines that there has been no substantial rotation of the second magnet 72 and the stem 42 and no substantial adjustment of the tappets 35, 37 and the inner brake pad 14. As such, the control system 100 utilizes the stored rotary angle for determining the wear of the inner brake pad 14 (as is further described herein below) and a stored total rotary angle which is also stored to the memory system 104. The stored rotary angle is exemplary a rotational degree (e.g., 86.0 degrees) relative to a datum, and in certain examples, the stored rotary angle could be the last sensed rotary angle sensed by the second sensor 72. For instance, if the stored rotary angle is initially 5.0 degrees and the second sensor 72 subsequently senses the second magnet 72 to have a sensed rotary angle of 88.0 degrees, the control system 100 can store or overwrite the sensed rotary angle as the new stored rotary angle for further use.

The stored total rotary angle is the total amount of rotation of the magnet 72 and the stem 42 over the life of the disc brake after the brake pads 14, 16 are replaced or the stored total rotary angle is reset. For example, when the inner brake pad 14 is initially mounted on the disc brake, the stored total rotary angle is 0.0 degrees. The above comparison steps 1401-1402 advantageously account for slight movements of the magnet 72 caused by vibrations or forces that may affect the truck and avoid incorrectly determining that the inner brake pad 14 has been adjusted.

At step 1403 the control system 100 calculates a total rotation of the second magnet 72 and the stem 42 based on the stored total rotary angle. The control system 100 divides the total rotary angle by 360.0 degrees to determine the total rotation. For example, if the total rotary angle is 25.0 degrees, the control system 100 calculates the total rotation to be 0.069 rotations (25.0 divided by 360.0). In another example, the total rotary angle is 458.0 degrees, the control system 100 calculates the total rotation to be 1.272 rotations (458.0 divided by 360.0).

However, at step 1404, if the difference between the sensed rotary angle and the stored rotary angle is greater than or equal to 1.0 degree (e.g., the stored rotary angle is 16.0 degrees and the sensed rotary angle is 20.0 degrees), the control system 100 determines that there has been substantial rotation of the second magnet 72 and the stem 42 and thereby substantial adjustment of the tappets 35, 37 and the inner brake pad 14. As such, the control system 100 utilizes the sensed rotary angle for determination of the wear of the inner brake pad 14 (as is further described herein below).

At step 1405, the control system 100 adds the difference between the sensed rotary angle and the stored rotary angle to the stored total rotary angle (which is stored on the memory system 104) to compute a corresponding cumulative total rotary angle. In one example, the cumulative total rotary angle is equal to the difference between the sensed rotary angle and the stored rotary angle (for example a difference of 4.0 degrees between sensed rotary angle of 20.0 degrees and the stored rotary angle of 16.0 degrees) added to the stored total rotary angle (e.g., 395.0 degrees such that the cumulative total rotary angle is 399.0 degrees. As such, the cumulative total rotary angle includes all changes in rotational position of the magnet 72 since the brake pads 14, 16 was installed on the disc brake or from a point at which the operator resets values stored on the memory system 104.

The control system 100, at step 1406, calculates total rotation of the second magnet 72 and the stem 42 based on the cumulative total rotary angle. The control system 100 divides the total cumulative rotary angle by 360.0 degrees to determine the total rotation. For example, if the cumulative total rotary angle is 25.0 degrees, the control system 100 calculates the total rotation to be 0.069 rotations (25.0 divided by 360.0). In another example, the cumulative total rotary angle is 458.0 degrees, the control system 100 calculates the total rotation to be 1.272 rotations (458.0 divided by 360.0).

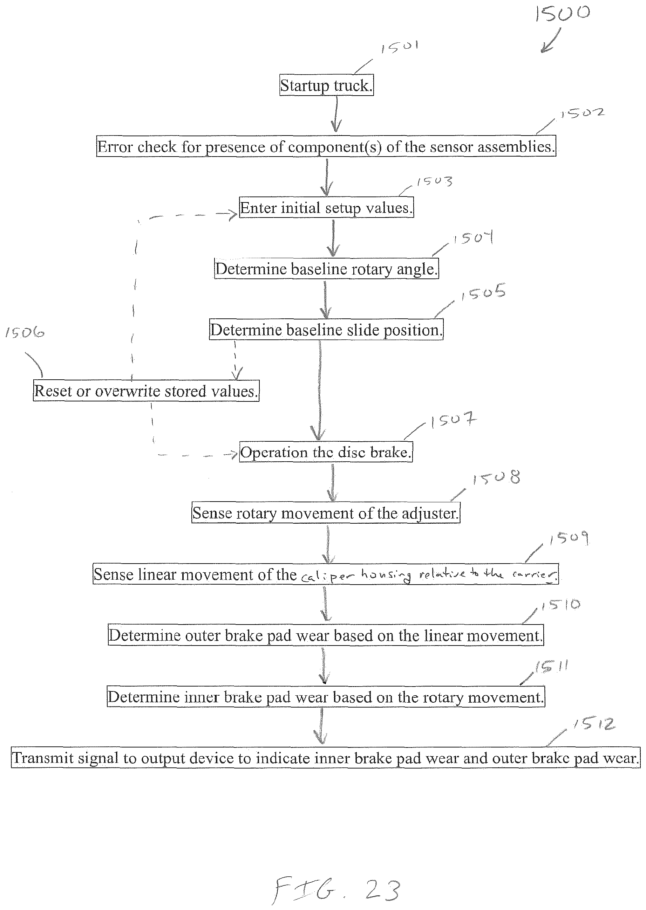

Referring to Fig. 23, another example method 1500 for determining wear of the inner brake pad 14 and the outer brake pad 16 for an example disc brake in accordance with some embodiments of the present disclosure is depicted.

At step 1501, the truck is started or powered on by operator and thereby the first sensor assembly 60, the second sensor assembly 70, and/or the control system 100 are provided with electrical power from a power source (e.g., battery). This step can be initiated by operator turning the key of the truck, pushing a button on a remote control, or engaging a switch in the cab of the truck.

Optionally, at step 1502, one or both sensor assemblies 60, 70 sense for the presence of the respective magnets 67, 72. For example, the second sensor 71 senses for presence of the second magnet 72 and generates corresponding output(s) which are received by the control system 100 which determines if the second sensor assembly 70 is operating properly. If the control system 100 determines the second magnet 72 is absent, the control system 100 determines that the second sensor assembly 70 is not operating properly and should be inspected by the operator. The control system 100 may provide an alert or error message via the operator interface device 121 to the operator for example (e.g., light on the dashboard of the truck). However, if the second magnet 72 is sensed, the control system 100 determines the second sensor assembly 70 is operating properly and the system is ready for determining the wear of the brake pads 14, 16. Steps similar to the steps described above can be utilized for the checking for presence of the first magnet 67 and functionality of the first sensor assembly 60.

At step 1503, an initial setup is conducted, including entering and/or operating the control system 100 to store the initial setup values for the disc brake. For example, the operator enters the initial thickness of the inner brake pad 14 and the initial thickness of the outer brake pad via the operator interface device 121 such that the initial thicknesses are stored on the memory system 104. The initial thicknesses may be predetermined by the manufacturer of the brake pads 14, 15 and/or measured by the operator during assembly of the system 55 and installation of the brake pads 14, 15 into the disc brake. In one example, the thickness of each brake pads 14, 15 is in the range of 13.0-15.0 millimeters (mm). In some examples, the thicknesses of the backing plates 20, 24 and/or the rotor 12 are also stored on the memory system 104. In addition, to the initial setup at step 1503, steps 1504-1505 can include determining and/or entering a baseline rotary angle of the second magnet 72 and/or baseline slide position the magnet 67 on the slide pin 52. In one example, the baseline rotary angle and/or the baseline slide position are measured by the operator. In another example, the gearing ratio of rotary to linear movement the stem (e.g., 2.25 mm / 1.0 rotation) is entered into the memory system 104. Note that another example method 1600 for determining the baseline rotary angle is described below and another example method 1800 for determining the baseline slide position is described below.

Note that in certain examples the steps 1503-1505 may be implemented prior to startup of the truck (at step 1501) such as during the assembly of the truck and during maintenance of the disc brake 161 (e.g., when the brake pads 14, 15 are replaced the new initial thicknesses of the brake pads 14, 15 are stored onto the memory system 104).

In addition or alternatively, at step 1506, the operator can reset the stored rotary, the baseline rotary angle, and/or the baseline slide position in the event that the inner brake pad 14 and/or the outer brake pad 16 are replaced after the brake pads 14, 16 are originally stored onto the memory system 104. The operator enters an input into the control system 100 (e.g., the operator engages and enters an input via the operator interface device 121, the operator pushes a 'reset' button or switch) to reset the stored rotary angle, the baseline rotary angle, total rotations, current rotary position, and/or the baseline slide position and/or enter new values for each.

The example method 1500 can continue with one or more of the following steps: at step 1507, the disc brake is operated (which is similar to above noted step 1103 of the example method 1100), at step 1508, sense rotary movement of the adjuster (which is similar to above noted step 1104 of the example method 1100), at step 1509, the sense linear movement of the caliper housing 26 relative to the carrier 28 (which is similar to above noted step 1105 of the example method 1100), at step 1510, determine outer brake pad wear based on the linear movement (which is similar to above noted step 1106 of the example method 1100), at step 1511, determine inner brake pad wear based on the rotary movement (which is similar to above noted step 1107 of the example method 1100), at step 1512, the transmit signal to output device to indicate inner brake pad wear and outer brake pad wear (which is similar to above noted step 1108 of the example method 1100). Note that the example methods of the present disclosure can include returning to completed steps and repeat one or more of the steps. For example, the example method 1500 can return to previously completed steps and repeat one or more steps. For instance, after step 1512, the method 1500 can return to step 1507 and repeat steps 1507-1512. In another instance, after step 1512, the method can return to step 1504 and repeat steps 1504-1505 and 1507-1512.

In certain examples, the method 1500 can include the steps of storing the outer brake pad wear, the inner brake pad wear, and/or any other components or values related to and/or used to determine outer brake pad wear and/or inner brake pad wear that are described herein the present disclosure (e.g., linear tappet distance, baseline slide position, baseline rotary angle, initial inner brake pad thickness, stored cumulative rotary angle) such that these can be utilized again the control system 100 in the event that the disc brake continues to operate or in the event that the truck is powered down or shut down.

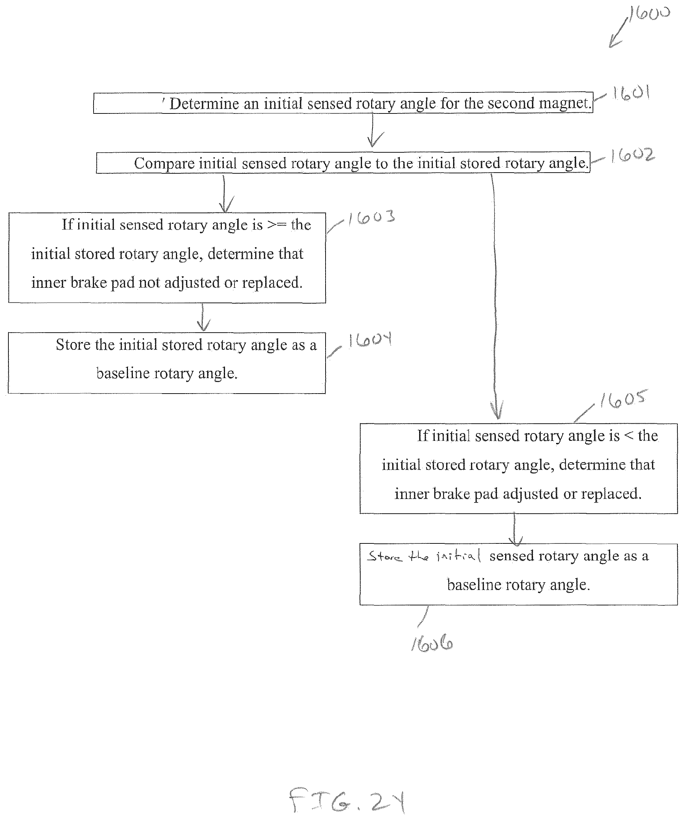

Referring to Fig. 24, one example method 1600 for determining the baseline rotary angle is described below.

At step 1601, the second sensor 71 senses the strength and/or position of the magnetic field of magnet 72 and sends corresponding signals to the control system 100 which determines an initial sensed rotary angle of the magnet 72. The second sensor 71 is fixed and the magnet 72 has opposing poles such that the second sensor 71 can sense the angular position of the magnet 72 based on the sensed magnetic field and/or magnetic field strength. For example, initial sensed rotary angle is a rotational degree or a rotary angle that is sensed by the second sensor 71 for instance 5.0 degrees (e.g., the initial sensed rotary angle can be set as 0.0 degrees to correspond to the initial angular position of the magnet 72 when the disc brake is assembled and the adjuster 27 has not yet been adjusted).

The control system 100 receives the signals from the second sensor 71, the control system 100 determines if the inner brake pad 14 has been replaced with a new inner brake pad by comparing the initial sensed rotary angle to an initial stored rotary angle (at step 1602). For example, initial stored rotary angle is a rotational degree or a rotary angle of the second magnet 72 that is stored on the memory system 104 (e.g., the initial stored rotary angle could be set as 0.0 degrees). If the initial sensed rotary angle is equal to or greater than the initial stored rotary angle (step 1603), the control system 100 determines that the inner brake pad 14 has not been replaced. For example, the initial sensed rotary angle is 12.0 degrees while the initial stored rotary angle is 9.0 degree indicating that the stem 42 of the adjuster 24 has been rotated in a first direction when the adjuster 27 was operated to account for further wear on the inner brake pad 14. As such, the inner brake pad 14 has not been replaced. Accordingly, at step 1604, the control system 100 stores the initial stored rotary angle as a baseline rotary angle (described further herein) on the memory system 104.

However, if the initial sensed rotary angle is less than the initial stored rotary angle (step 1605), the control system 100 determines that the inner brake pad 14 has been replaced or the position of the inner brake pad 14 reset. For example, the initial sensed rotary angle is 1.0 degree while the initial stored rotary angle is 9.0 degree indicating that the stem 42 of the adjuster 24 has been rotated in an opposite second direction such as in instances of the inner brake pad 14 being replaced or repositioned. The control system 100, at step 1606, thereby stores the initial sensed rotary angle as the baseline rotary angle.

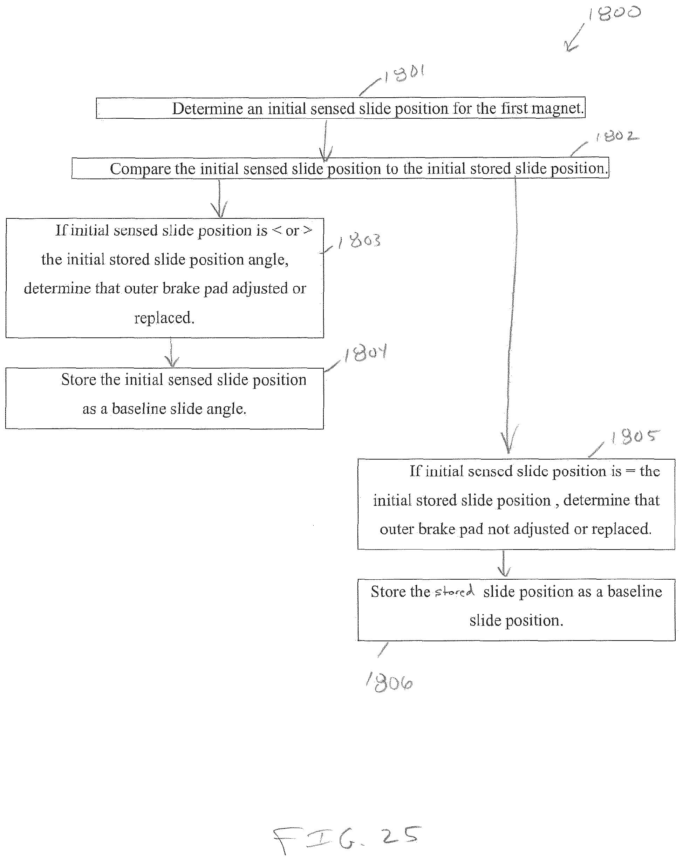

Referring to Fig. 25, one example method 1800 for determining the baseline slide position is described below.

At step 1801, the first sensor 61 senses the magnetic field strength of the first magnet 67 and sends corresponding signals to the control system 100. The first sensor 61 is fixed to the caliper housing 26 and the magnet 67 is coupled to the slide pin 52 such that the caliper housing 26 and the first sensor 61 move relative to and along the magnet 67 that is coupled to the slide pin 52. Note that the slide pin 52 extends from the carrier 28 that is fixed to the vehicle. The magnetic field strength is greater when the magnet 67 is close to the first sensor 61 in comparison to when the magnet 67 is spaced apart from the first sensor 61.

The control system 100 receives the signals from the first sensor 61 corresponding to the magnetic field strength of the first magnet 67 and determines an initial sensed slide position between the magnet 67 and the first sensor 61. The control system 100 determines the initial sensed slide position with a lookup table that correlates the magnetic field strength to a slide position. The initial sensed slide position can be equal to, greater than, or less than a datum or the initial stored slide position which is a position of the magnet 67 on the slide pin 52 when a new or replacement outer brake pad 16 on the disc brake.

At step 1802, the control system compares the initial sensed slide position to the initial stored slide position. If the initial sensed slide position, is less than or greater than the initial stored slide position at (step 1803), the control system 100 stores the initial sensed slide position as a baseline slide position (step 1804) and thereby determines that the outer brake pad 14 has been replaced or reset. For example, the sensed slide position is 15.0 mm while the initial stored rotary angle is 12.0 mm indicating that outer brake pad 16 has a different thickness than the thickness of the outer brake pad 16 initially coupled to the disc brake.

However, if the initial sensed slide position is equal to the initial stored slide position (step 1805), the control system 100 determines that the initial stored slide position is stored (step 1806) as the baseline slide position.

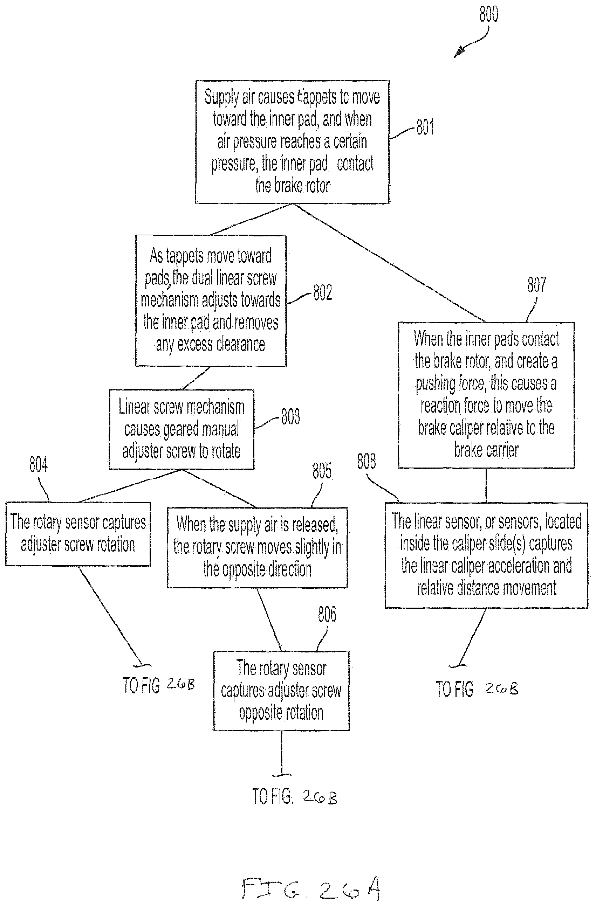

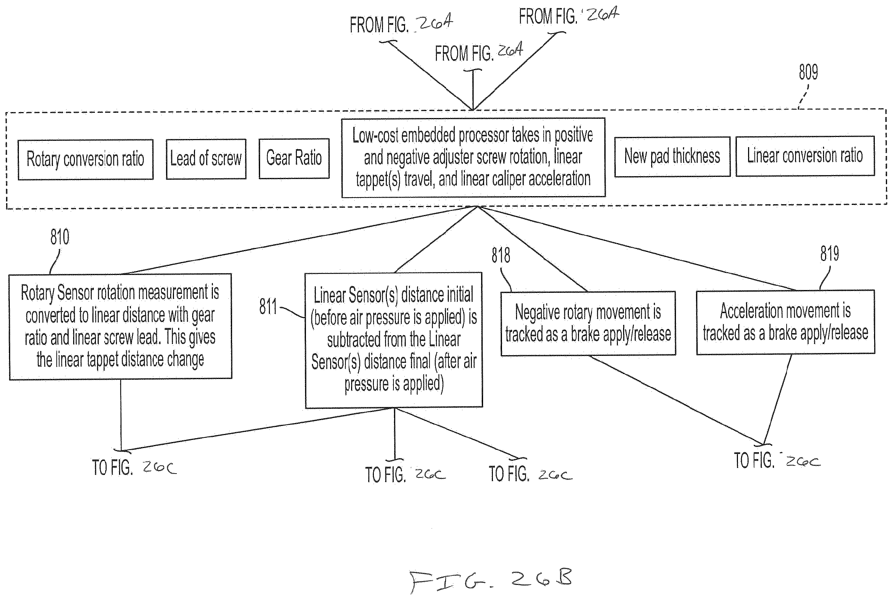

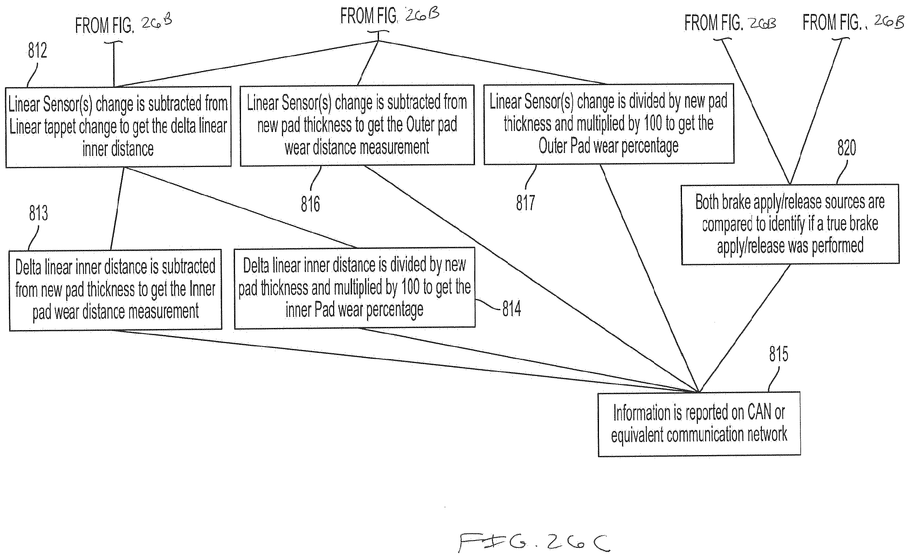

Referring now to Fig. 26A-26C, another example operational sequence or method 800 according to the present disclosure.

The method 800 begins as step 801 compressed air is supplied to the disc brake 10 such that the disc brake operates (as described above) to apply braking forces thereby slowing or stopping the rotation of the corresponding wheel. In one example, the supply air causes the tappets 35, 37 to move toward the inner brake pad 14, and when the air pressure reaches a certain predetermined pressure, the inner brake pad 14 contacts the brake rotor 12

At step 802 at the tappets 35, 37 move toward the brake pads 14, 16 the adjuster 27 adjusts toward the brake pads 14, 16 and removed any excess clearance distance. In one example, as the tappets 35, 57 move toward the brake pads 14, 16 the adjuster 27 having a duel linear screw mechanism, adjusts toward the inner brake pad 14 and removes any excess clearance between the inner brake pad 14 and the rotor 12.

Note that in the adjuster 27, rotation of the stem 42 of the primary adjuster assembly 38 causes commensurate rotation of the stem 42 of the secondary adjuster assembly via the chain 43, at step 803. In one example, the linear screw mechanism of the adjuster 27 causes geared manual adjuster screws with stems 42 to rotate.

At step 804, the second sensor 71 senses rotation of the stem 42 in a first direction of rotation.

At step 805, when the compressed air is no longer applied to the disc brake, the stem 42 moves in the second direction of rotation. In one example, when the supply air is released, the stem 42 moves slightly in the opposite second direction or rotation.

The second sensor 71, at step 806, senses the rotation of the stem 42 in the opposite second direction of rotation.

At step 807, the inner brake pad 14 contacts the rotor 12 and creates a pushing force that causes a reaction force to move the caliper housing 26 relative to the carrier 28. The first sensor 61, at step 808, is configured to determine the sensed linear slide distance and/or relative acceleration of the caliper housing 26.

The data from the sensors 61, 71 is communicated to the control system 100 which is configured to determine wear state of the brake pad(s) 14, 16 and/or the rotor 12. The control system 100, at step 809, can be configured to account for several factors or parameters including characteristics of the disc brake 10, the operation thereof, and/or associated factors acting on the disc brake 10 (e.g., temperature, humidity), which may be stored to the memory system 104. Example factors can include rotation conversion ratios, length of the stem 42 of the screws in the adjuster 27, gear ratio(s) of the components of the adjuster 27, more than one outputs corresponding to rotation of the stem 42, more than one outputs corresponding to the sensed linear slide distance of the caliper housing 26, more than one outputs corresponding to the acceleration of the caliper housing 26 relative to the carrier 28, installed thickness of the brake pads 14, 16 prior to use, and/or liner slide distance conversion ratios.

At step 810, the control system 100 receives the data from the second sensor 71 and determines the linear tappet distance based on the rotary angle the gear ratio, length of screw in the adjuster 27, stored total rotary angle, and/or other variables some of which are described herein the present disclosure. The control system 100, at step 811, receives the data from the first sensor 61 and determines the outer brake pad wear and sensed linear slide distance based on sensed position of the magnet 67, initial position of the magnet 67, and/or other variables some of which are described herein the present disclosure. In one example, the control system 100 subtracts the baseline slide position of the magnet 67 from the operational slide position of the magnet 67 sensed by the first sensor 61 after the compressed air is applied to the disc brake 10. The outer brake pad wear is subtracted from the linear tappet distance, at step 812, to determine the inner brake pad wear.

At step 813, the inner brake pad wear is then subtracted from the initial inner brake pad thickness (which is stored on the memory system 104) to determine remaining thickness of the inner brake pad 14.

At step 814, the remaining thickness of the inner brake pad 14 is divided by the initial inner brake pad thickness (which is stored on the memory system 104) and multiplied by 100 to determine an inner pad wear percentage. The inner pad wear percentage is indicated to the operator via the operator interface device 121, at step 815, or reported on a CAN or other communication network to the operator.

At step 816, the outer brake pad wear is subtracted from the initial outer brake pad thickness (which is stored on the memory system 104) to determine the remaining thickness of the outer brake pad 16. The outer pad wear distance is indicated to the operator via the operator interface device 121, at step 815, or reported on a CAN or other communication network to the operator.

At step 817, the remaining thickness of the outer brake pad 16 is divided by the initial outer brake pad thickness (which is stored on the memory system 104) and multiplied by 100 to get an outer pad wear percentage. This outer pad wear percentage is indicated to the operator via the operator interface device 121, at step 815, reported on a CAN or other communication network to the operator.

Note that at step 818 any negative or reverse rotation of the stem 42 is tracked at the compressed air is removed from the disc brake and at step 819 the control system 100 determines the acceleration of the caliper housing 26 relative to the carrier 28. At step 820, any negative or reverse rotation of the stem 42 and the acceleration of the caliper housing 26 are utilized by the control system 100 to determine if braking forces are actually applied to the wheels. This information is indicated to the operator via the operator interface device 121, at step 815, reported on a CAN or other communication network to the operator.

In certain examples a method for determining wear of a disc brake that is for braking a rotor, the disc brake configured to clamp an inner brake pad and an outer brake pad onto the rotor and having a carrier, a caliper housing, and an adjuster configured to adjust position of the inner brake pad and/or the outer brake pad, includes sensing linear movement of the caliper housing relative to the carrier, sensing rotary movement of the adjuster, determining outer brake pad wear based on the linear movement of the caliper housing relative to the carrier, and determining inner brake pad wear based on the rotary movement of the adjuster.

In independent aspects, coupling a first sensor assembly to the disc brake such that a first magnet is coupled to the carrier, coupling a second sensor assembly to the disc brake such that a second magnet is coupled to the adjuster, the sensing linear movement of the caliper housing relative to the carrier includes sensing the first magnet, and the sensing rotary movement of the adjuster includes sensing the second magnet. In independent aspects, coupling the first sensor assembly to the disc brake includes coupling a first sensor for sensing the first magnet to the caliper housing, and wherein coupling the second sensor assembly to the disc brake includes coupling a second sensor for sensing the second magnet to the caliper housing. In independent aspects, transmitting an output that is indicative of the outer brake pad wear and/or the inner brake pad wear from a control system to an output device. In independent aspects, the determining the inner brake pad wear is based on both the rotary movement of the adjuster and the linear movement of the caliper housing relative to the carrier. In independent aspects, the determining the outer brake pad wear by determining the difference between an operational slide position and a baseline slide position and the operational slide position is determined when the disc brake clamps the outer brake pad onto the rotor. In independent aspects, sensing, with a sensor coupled to the caliper housing, a magnet coupled to the carrier and determining the operational slide position based on the sensing of the magnet. In independent aspects, determining a percent outer brake pad wear by dividing the outer brake pad wear by an initial outer brake pad thickness. In independent aspects, indicating an alert via an external device when the percent outer brake pad wear is greater than a maximum allowable percent outer brake pad wear. In independent aspects, the determining the inner brake pad wear includes determining the difference between a linear tappet distance of the adjuster and the outer brake pad wear to thereby determine the inner brake pad wear. In independent aspects, determining the linear tappet distance based on a total rotation of a tappet of the adjuster. In independent aspects, determining the total rotation by dividing a total rotary angle or a cumulative total rotary angle of the tappet by 360.0 degrees. In independent aspects, the total rotation is based on a stored total rotary angle of the tappet stored to a memory system of a control system. In independent aspects, the total rotation is based on a cumulative total rotary angle of the tappet determined by a control system and including sensing a sensed rotary angle as the tappet is rotated, determining a difference between the sensed rotary angle and a stored rotary angle, and adding the difference between the sensed rotary angle and the stored rotary angle to the stored rotary angle to determine the cumulative total rotary angle. In independent aspects, determining a percent inner brake pad wear by dividing the inner brake pad wear by an initial inner brake pad thickness. In independent aspects, indicating an alert via an external device when the percent inner brake pad wear is greater than a maximum allowable percent inner brake pad wear.

In certain examples, a method for determining wear of a disc brake that is for braking a rotor, the disc brake configured to clamp an inner brake pad and an outer brake pad onto the rotor and having an adjuster configured to adjust position of the inner brake pad and/or the outer brake pad, a carrier, and a caliper housing includes coupling a first sensor assembly to the disc brake such that a first magnet is coupled to the carrier and a first sensor for sensing the first magnet, coupling a second sensor assembly to the disc brake such that a second magnet is coupled to the carrier and a second sensor for sensing the second magnet, sensing the first magnet to determine linear movement of the caliper housing relative to the carrier, sensing the second magnet to determine rotary movement of the adjuster, determining outer brake pad wear based on the linear movement of the caliper housing relative to the carrier, and determining inner brake pad wear based on the rotary movement of the adjuster.

In independent aspects, the determining the outer brake pad wear by determining the difference between an operational slide position and a baseline slide position and the operational slide position is determined when the disc brake clamps the outer brake pad onto the rotor. In independent aspects, the determining the inner brake pad wear includes determining a difference between a linear tappet distance of the adjuster and the outer brake pad wear to thereby determine the inner brake pad wear. In independent aspects, transmitting an output that is indicative of the outer brake pad wear and/or the inner brake pad wear from a control system to an output device.

In certain examples, a system for braking a vehicle includes a rotor, a disc brake having an inner brake pad and an outer brake pad that are selectively clamped onto the rotor to slow or stop rotation of the rotor, a carrier coupled to the vehicle, a caliper housing movable coupled to the carrier, and an adjuster for moving the inner brake pad and/or the outer brake pad relative to the rotor, a first sensor for sensing linear movement of the caliper housing relative to the carrier housing, a second sensor for sensing rotary movement of the adjuster, and a control system that receives an output from the first sensor corresponding the linear movement of the caliper housing relative to the carrier, receives an output from the second sensor corresponding to the rotary movement of the adjuster, and determines outer brake pad wear based on the linear movement of the caliper housing relative to the carrier and inner brake pad wear based on the rotary movement of the adjuster.

In certain examples, a system for braking a vehicle includes a rotor, a disc brake having an inner brake pad and an outer brake pad that are selectively clamped onto the rotor to slow or stop rotation of the rotor, a carrier coupled to the vehicle, a caliper housing movable coupled to the carrier, and an adjuster for moving the inner brake pad and/or the outer brake pad relative to the rotor, a first sensor for sensing linear movement of the caliper housing relative to the carrier housing, a second sensor for sensing rotary movement of the adjuster, and a control system that determines outer brake pad wear based on the linear movement of the caliper housing relative to the carrier and inner brake pad wear based on the rotary movement of the adjuster.

In independent aspects, the control system transmits an output to an output device, the output being indicative of the outer brake pad wear and/or the inner brake pad wear. In independent aspects, the control system determines the inner brake pad wear based on both the rotary movement of the adjuster and the linear movement of the caliper housing relative to the carrier. In independent aspects, the second sensor is a potentiometer. In independent aspects, the first sensor and the second sensor are coupled to the caliper housing. In independent aspects, a first magnet is coupled to the carrier and a second magnet coupled to the carrier housing, the first sensor is configured to sense the first magnet to determine the linear movement of the caliper housing relative to the carrier, and the second sensor is configured to sense the second magnet to determine the rotary movement of the adjuster. In independent aspects, a slide pin is coupled to the carrier, a first magnet is coupled to the slide pin, the slide pin is received into a sleeve defined by the caliper housing, and the first sensor is configured to sense the first magnet to determine the linear movement of the caliper housing relative to the carrier. In independent aspects, a magnet housing holds the first magnet relative to the slide pin. In independent aspects, the control system determines operational slide position based on the output from the first sensor and determines a difference between the operational slide position and a baseline slide position stored on a memory system of the control system to determine the outer brake pad wear. In independent aspects, the control system determines a percent outer brake pad wear by dividing the outer brake pad wear by an initial outer brake pad thickness that is stored on a memory system of the control system. In independent aspects, the control system transmits an output indicative of the percent outer brake pad wear is greater than a maximum allowable percent outer brake pad wear to an output device. In independent aspects, the adjuster includes a tappet and the second sensor is a potentiometer and the second sensor engages with the adjuster to sense rotation as the rotary movement of the adjuster occurs. In independent aspects, the adjuster includes a tappet and a second magnet is coupled to the tappet and the second sensor is configured to sense the second magnet to determine the rotary movement of the adjuster. In independent aspects, a magnet housing holds the second magnet relative to the tappet. In independent aspects, the control system determines linear tappet distance based on the output from the second sensor and determines a difference between the linear tappet distance and the outer brake pad wear to determine the inner brake pad wear. In independent aspects, the control system determines the linear tappet distance based on a total rotation of the tappet stored on a memory system of the control system. In independent aspects, the control system determines a percent inner brake pad wear by dividing the inner brake pad wear by an initial inner brake pad thickness that is stored on a memory system of the control system. In independent aspects, the control system transmits a signal indicative of the percent inner brake pad wear is greater than a maximum allowable percent inner brake pad wear to a communication device.

In certain examples, a system for determining wear of a disc brake for braking a rotor of a vehicle, the disc brake having a caliper configured to clamp opposing inner and outer brake pads onto the rotor, a carrier, a caliper housing, and an adjuster for moving the inner brake pad and/or the outer brake pad relative to the rotor, includes a first sensor configured to sense linear movement of the caliper housing relative to the carrier, a second sensor configured to sense sensing rotary movement of the adjuster, and a control system that determines outer brake pad wear based on the linear movement of the caliper housing relative to the carrier, determines inner brake pad wear based on the rotary movement of the adjuster, and transmits a signal indicative of the wear of the outer brake pad wear and the inner brake pad wear.

In independent aspects, the control system determines the inner brake pad wear based on both the rotary movement of the adjuster and the linear movement of the caliper housing relative to the carrier.

Citations to a number of references are made herein. The cited references are incorporated by reference herein in their entireties. In the event that there is an inconsistency between a definition of a term in the specification as compared to a definition of the term in a cited reference, the term should be interpreted based on the definition in the specification.

In the present description, certain terms have been used for brevity, clarity, and understanding. No unnecessary limitations are to be inferred therefrom beyond the requirement of the prior art because such terms are used for descriptive purposes and are intended to be broadly construed. The different apparatuses, systems, and method steps described herein may be used alone or in combination with other apparatuses, systems, and methods. It is to be expected that various equivalents, alternatives, and modifications are possible within the scope of the appended claims.

The functional block diagrams, operational sequences, and flow diagrams provided in the Figures are representative of exemplary architectures, environments, and methodologies for performing novel aspects of the disclosure. While, for purposes of simplicity of explanation, the methodologies included herein may be in the form of a functional diagram, operational sequence, or flow diagram, and may be described as a series of acts, it is to be understood and appreciated that the methodologies are not limited by the order of acts, as some acts may, in accordance therewith, occur in a different order and/or concurrently with other acts from that shown and described herein. For example, those skilled in the art will understand and appreciate that a methodology can alternatively be represented as a series of interrelated states or events, such as in a state diagram. Moreover, not all acts illustrated in a methodology may be required for a novel implementation.

This written description uses examples to disclose the invention and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Three sets of numbered clauses are now provided. Clause set A relates to a system for monitoring a wear state of a disc brake for braking a rotor of a vehicle, the disc brake having a caliper configured to clamp opposing inner and outer brake pads onto the rotor, a carrier, an adjuster, and a caliper housing, the system comprising: a first sensor configured to sense a linear slide distance of the caliper housing relative to the carrier; and a control system configured to calculate an estimated wear amount of the outer brake pad based on the linear slide distance. Clause set B relates to a method for determining wear of a disc brake that is for braking a rotor, the disc brake configured to clamp an inner brake pad and an outer brake pad onto the rotor and having a carrier, a caliper housing, and an adjuster configured to adjust position of the inner brake pad and/or the outer brake pad, includes sensing linear movement of the caliper housing relative to the carrier, sensing rotary movement of the adjuster, determining outer brake pad wear based on the linear movement of the caliper housing relative to the carrier, and determining inner brake pad wear based on the rotary movement of the adjuster. Clause set C relates to a system for braking a vehicle includes a rotor, a disc brake having an inner brake pad and an outer brake pad that are selectively clamped onto the rotor to slow or stop rotation of the rotor, a carrier coupled to the vehicle, a caliper housing movable coupled to the carrier, and an adjuster for moving the inner brake pad and/or the outer brake pad relative to the rotor, a first sensor for sensing linear movement of the caliper housing relative to the carrier housing, a second sensor for sensing rotary movement of the adjuster, and a control system that determines outer brake pad wear based on the linear movement of the caliper housing relative to the carrier and inner brake pad wear based on the rotary movement of the adjuster.

### Clause set A

Clause 1A. A system for monitoring a wear state of a disc brake for braking a rotor of a vehicle, the disc brake having a caliper configured to clamp opposing inner and outer brake pads onto the rotor, a carrier, an adjuster, and a caliper housing, the system comprising:
   a first sensor configured to sense a linear slide distance of the caliper housing relative to the carrier; and
   a control system configured to calculate an estimated wear amount of the outer brake pad based on the linear slide distance.
Clause 2A. The system according to clause 1A, further comprising a second sensor configured to sense rotation of an adjuster as the caliper clamps onto the rotor; and
   wherein the control system is configured to calculate a linear tappet distance and an estimated wear amount of the inner brake pad based upon the linear tappet distance.
Clause 3A. A method for determining an estimated wear amount of an inner brake pad and an outer brake pad based, the method comprising:
   sensing with a first sensor a linear slide distance of a caliper housing relative to a carrier of a disc brake; and
   sensing with a second rotation of an adjuster as the disc bake; and
   determining with a control system:
      a linear tappet distance and the estimated wear amount of the inner brake pad based upon the linear tappet distance; and
      the estimated wear amount of the outer brake pad based upon the linear slide distance.

### Clause set B

Clause 1B. A method for determining wear of a disc brake that is for braking a rotor, the disc brake configured to clamp an inner brake pad and an outer brake pad onto the rotor and having a carrier, a caliper housing, and an adjuster configured to adjust position of the inner brake pad and/or the outer brake pad, the method comprising:
   sensing linear movement of the caliper housing relative to the carrier;
   sensing rotary movement of the adjuster;
   determining outer brake pad wear based on the linear movement of the caliper housing relative to the carrier; and
   determining inner brake pad wear based on the rotary movement of the adjuster.
Clause 2B. The method according to clause 1B, further comprising:
   coupling a first sensor assembly to the disc brake such that a first magnet is coupled to the carrier; and
   coupling a second sensor assembly to the disc brake such that a second magnet is coupled to the adjuster; and
   wherein the sensing linear movement of the caliper housing relative to the carrier includes sensing the first magnet; and
   wherein the sensing rotary movement of the adjuster includes sensing the second magnet.
Clause 3B. The method according to clause 2B, wherein coupling the first sensor assembly to the disc brake includes coupling a first sensor for sensing the first magnet to the caliper housing, and wherein coupling the second sensor assembly to the disc brake includes coupling a second sensor for sensing the second magnet to the caliper housing.
Clause 4B. The method according to clause 1B, further comprising transmitting an output that is indicative of the outer brake pad wear and/or the inner brake pad wear from a control system to an output device.
Clause 5B. The method according to clause 1B, wherein the determining the inner brake pad wear is based on both the rotary movement of the adjuster and the linear movement of the caliper housing relative to the carrier.
Clause 6B. The method according to clause 1B, wherein the determining the outer brake pad wear by determining the difference between an operational slide position and a baseline slide position; and
   wherein the operational slide position is determined when the disc brake clamps the outer brake pad onto the rotor.
Clause 7B. The method according to clause 6B, further comprising:
   sensing, with a sensor coupled to the caliper housing, a magnet coupled to the carrier; and
   determining the operational slide position based on the sensing of the magnet.
Clause 8B. The method according to clause 1B, further comprising determining a percent outer brake pad wear by dividing the outer brake pad wear by an initial outer brake pad thickness.
Clause 9B. The method according to clause 8B, further comprising indicating an alert via an external device when the percent outer brake pad wear is greater than a maximum allowable percent outer brake pad wear.
Clause 10B. The method according to clause 1B, wherein the determining the inner brake pad wear includes determining the difference between a linear tappet distance of the adjuster and the outer brake pad wear to thereby determine the inner brake pad wear.
Clause 11B. The method according to clause 10B, further comprising determining the linear tappet distance based on a total rotation of a tappet of the adjuster.
Clause 12B. The method according to clause 11B, further comprising determining the total rotation by dividing a total rotary angle or a cumulative total rotary angle of the tappet by 360.0 degrees.
Clause 13B. The method according to clause 11B, wherein the total rotation is based on a stored total rotary angle of the tappet stored to a memory system of a control system.
Clause 14B. The method according to clause 11B, wherein the total rotation is based on a cumulative total rotary angle of the tappet determined by a control system, and further comprising:
   sensing a sensed rotary angle as the tappet is rotated;
   determining a difference between the sensed rotary angle and a stored rotary angle; and
   adding the difference between the sensed rotary angle and the stored rotary angle to the stored rotary angle to determine the cumulative total rotary angle.
Clause 15B. The method according to clause 1B, further comprising determining a percent inner brake pad wear by dividing the inner brake pad wear by an initial inner brake pad thickness.
Clause 16B. The method according to clause 15B, further comprising indicating an alert via an external device when the percent inner brake pad wear is greater than a maximum allowable percent inner brake pad wear.
Clause 17B. A method for determining wear of a disc brake that is for braking a rotor, the disc brake configured to clamp an inner brake pad and an outer brake pad onto the rotor and having an adjuster configured to adjust position of the inner brake pad and/or the outer brake pad, a carrier, and a caliper housing, the method comprising:
   coupling a first sensor assembly to the disc brake such that a first magnet is coupled to the carrier and a first sensor for sensing the first magnet;
   coupling a second sensor assembly to the disc brake such that a second magnet is coupled to the carrier and a second sensor for sensing the second magnet;
   sensing the first magnet to determine linear movement of the caliper housing relative to the carrier;
   sensing the second magnet to determine rotary movement of the adjuster;
   determining outer brake pad wear based on the linear movement of the caliper housing relative to the carrier; and
   determining inner brake pad wear based on the rotary movement of the adjuster.
Clause 18B. The method according to clause 17B, wherein the determining the outer brake pad wear by determining the difference between an operational slide position and a baseline slide position; and
   wherein the operational slide position is determined when the disc brake clamps the outer brake pad onto the rotor.
Clause 19B. The method according to clause 18B, wherein the determining the inner brake pad wear includes determining a difference between a linear tappet distance of the adjuster and the outer brake pad wear to thereby determine the inner brake pad wear.
Clause 20B. The method according to clause 1B, further comprising transmitting an output that is indicative of the outer brake pad wear and/or the inner brake pad wear from a control system to an output device.

### Clause set C

Clause 1C. A system for braking a vehicle, the system comprising:
   a rotor;
   a disc brake including:
      an inner brake pad and an outer brake pad that are selectively clamped onto the
   rotor to slow or stop rotation of the rotor;
      a carrier coupled to the vehicle;
      a caliper housing movable coupled to the carrier; and
      an adjuster for moving the inner brake pad and/or the outer brake pad relative to the rotor;
   a first sensor for sensing linear movement of the caliper housing relative to the carrier housing;
   a second sensor for sensing rotary movement of the adjuster;
   a control system that determines outer brake pad wear based on the linear movement of the caliper housing relative to the carrier and inner brake pad wear based on the rotary movement of the adjuster.
Clause 2C. The system according to clause 1C, wherein the control system transmits an output to an output device, the output being indicative of the outer brake pad wear and/or the inner brake pad wear.
Clause 3C. The system according to clause 1C, wherein the control system determines the inner brake pad wear based on both the rotary movement of the adjuster and the linear movement of the caliper housing relative to the carrier.
Clause 4C. The system according to clause 1C, wherein the second sensor is a potentiometer.
Clause 5C. The system according to clause 1C, wherein the first sensor and the second sensor are coupled to the caliper housing.
Clause 6C. The system according to clause 1C, further comprising a first magnet coupled to the carrier and a second magnet coupled to the carrier housing;
   wherein the first sensor is configured to sense the first magnet to determine the linear movement of the caliper housing relative to the carrier; and
   wherein the second sensor is configured to sense the second magnet to determine the rotary movement of the adjuster.
Clause 7C. The system according to clause 1C, further comprising:
   a slide pin coupled to the carrier; and
   a first magnet coupled to the slide pin;
   wherein the slide pin is received into a sleeve defined by the caliper housing; and
   wherein the first sensor is configured to sense the first magnet to determine the linear movement of the caliper housing relative to the carrier.
Clause 8C. The system according to clause 7C, further comprising a magnet housing that holds the first magnet relative to the slide pin.
Clause 9C. The system according to clause 1C, wherein the control system determines operational slide position based on the output from the first sensor and determines a difference between the operational slide position and a baseline slide position stored on a memory system of the control system to determine the outer brake pad wear.
Clause 10C. The system according to clause 1C, wherein the control system determines a percent outer brake pad wear by dividing the outer brake pad wear by an initial outer brake pad thickness that is stored on a memory system of the control system.
Clause 11C. The system according to clause 10C, wherein the control system transmits an output indicative of the percent outer brake pad wear is greater than a maximum allowable percent outer brake pad wear to an output device.
Clause 12C. The system according to clause 1C, wherein the adjuster includes a tappet and the second sensor is a potentiometer, and wherein the second sensor engages with the adjuster to sense rotation as the rotary movement of the adjuster occurs.
Clause 13C. The system according to clause 1C, wherein the adjuster includes a tappet, and further comprising a second magnet coupled to the tappet; and
   wherein the second sensor is configured to sense the second magnet to determine the rotary movement of the adjuster.
Clause 14C. The system according to clause 13C, further comprising a magnet housing that holds the second magnet relative to the tappet.
Clause 15C. The system according to clause 13C, wherein the control system determines linear tappet distance based on the output from the second sensor and determines a difference between the linear tappet distance and the outer brake pad wear to determine the inner brake pad wear.
Clause 16C. The system according to clause 15C, wherein the control system determines the linear tappet distance based on a total rotation of the tappet stored on a memory system of the control system.
Clause 17C. The system according to clause 1C, wherein the control system determines a percent inner brake pad wear by dividing the inner brake pad wear by an initial inner brake pad thickness that is stored on a memory system of the control system.
Clause 18C. The system according to clause 17C, wherein the control system transmits an output indicative of the percent inner brake pad wear is greater than a maximum allowable percent inner brake pad wear to a communication device.
Clause 19C. A system for determining wear of a disc brake for braking a rotor of a vehicle, the disc brake having a caliper configured to clamp opposing inner and outer brake pads onto the rotor, a carrier, a caliper housing, and an adjuster for moving the inner brake pad and/or the outer brake pad relative to the rotor, the system comprising:
   a first sensor configured to sense linear movement of the caliper housing relative to the carrier;
   a second sensor configured to sense sensing rotary movement of the adjuster;
   a control system configured to:
      determine outer brake pad wear based on the linear movement of the caliper
   housing relative to the carrier; and
      determine inner brake pad wear based on the rotary movement of the adjuster; and transmit an output indicative of the wear of the outer brake pad wear and the inner brake pad wear.
Clause 20C. The system according to clause 19C, wherein the control system determines the inner brake pad wear based on both the rotary movement of the adjuster and the linear movement of the caliper housing relative to the carrier.

## Claims

1. A system for braking a vehicle, the system comprising:
a rotor;
a disc brake including:
an inner brake pad and an outer brake pad that are selectively clamped onto the rotor to slow or stop rotation of the rotor;
a carrier coupled to the vehicle;
a caliper housing movable coupled to the carrier; and
an adjuster for moving the inner brake pad and/or the outer brake pad relative to the rotor;
a first sensor for sensing linear movement of the caliper housing relative to the carrier housing;
a second sensor for sensing rotary movement of the adjuster;
a control system that determines outer brake pad wear based on the linear movement of the caliper housing relative to the carrier and inner brake pad wear based on the rotary movement of the adjuster.

2. The system according to claim 1, wherein the control system:
transmits an output to an output device, the output being indicative of the outer brake pad wear and/or the inner brake pad wear; and/or
determines the inner brake pad wear based on both the rotary movement of the adjuster and the linear movement of the caliper housing relative to the carrier.

3. The system according to claim 1, wherein:
the second sensor is a potentiometer; and/or
the first sensor and the second sensor are coupled to the caliper housing.

4. The system according to claim 1, further comprising a first magnet coupled to the carrier and a second magnet coupled to the carrier housing;
wherein the first sensor is configured to sense the first magnet to determine the linear movement of the caliper housing relative to the carrier; and
wherein the second sensor is configured to sense the second magnet to determine the rotary movement of the adjuster.

5. The system according to claim 1, further comprising:
a slide pin coupled to the carrier; and
a first magnet coupled to the slide pin;
wherein the slide pin is received into a sleeve defined by the caliper housing; and
wherein the first sensor is configured to sense the first magnet to determine the linear movement of the caliper housing relative to the carrier.

6. The system according to claim 5, further comprising a magnet housing that holds the first magnet relative to the slide pin.

7. The system according to claim 1, wherein the control system determines operational slide position based on the output from the first sensor and determines a difference between the operational slide position and a baseline slide position stored on a memory system of the control system to determine the outer brake pad wear.

8. The system according to claim 1, wherein the control system determines a percent outer brake pad wear by dividing the outer brake pad wear by an initial outer brake pad thickness that is stored on a memory system of the control system.

9. The system according to claim 8, wherein the control system transmits an output indicative of the percent outer brake pad wear is greater than a maximum allowable percent outer brake pad wear to an output device.

10. The system according to claim 1, wherein the adjuster includes a tappet and the second sensor is a potentiometer, and wherein the second sensor engages with the adjuster to sense rotation as the rotary movement of the adjuster occurs.

11. The system according to claim 1, wherein the adjuster includes a tappet, and further comprising a second magnet coupled to the tappet; and
wherein the second sensor is configured to sense the second magnet to determine the rotary movement of the adjuster; and
optionally further comprising a magnet housing that holds the second magnet relative to the tappet.

12. The system according to claim 11, wherein the control system determines linear tappet distance based on the output from the second sensor and determines a difference between the linear tappet distance and the outer brake pad wear to determine the inner brake pad wear; and optionally wherein the control system determines the linear tappet distance based on a total rotation of the tappet stored on a memory system of the control system.

13. The system according to claim 1, wherein the control system determines a percent inner brake pad wear by dividing the inner brake pad wear by an initial inner brake pad thickness that is stored on a memory system of the control system, and
optionally wherein the control system transmits an output indicative of the percent inner brake pad wear is greater than a maximum allowable percent inner brake pad wear to a communication device.

14. A system for determining wear of a disc brake for braking a rotor of a vehicle, the disc brake having a caliper configured to clamp opposing inner and outer brake pads onto the rotor, a carrier, a caliper housing, and an adjuster for moving the inner brake pad and/or the outer brake pad relative to the rotor, the system comprising:
a first sensor configured to sense linear movement of the caliper housing relative to the carrier;
a second sensor configured to sense sensing rotary movement of the adjuster;
a control system configured to:
determine outer brake pad wear based on the linear movement of the caliper housing relative to the carrier; and
determine inner brake pad wear based on the rotary movement of the adjuster; and
transmit an output indicative of the wear of the outer brake pad wear and the inner brake pad wear.

15. The system according to claim 14, wherein the control system determines the inner brake pad wear based on both the rotary movement of the adjuster and the linear movement of the caliper housing relative to the carrier.
